(19) Europäisches Patentamt
European Patent Office
Office européen des brevets

(11) **EP 2 619 482 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(21) Anmeldenummer: **11739061.7**

(22) Anmeldetag: **03.08.2011**

(51) Int Cl.:
*F16H 61/688* (2006.01)  *F16H 61/70* (2006.01)
*F16H 37/04* (2006.01)  *F16H 61/04* (2006.01)
*B60W 10/02* (2006.01)  *B60W 10/06* (2006.01)
*B60W 10/10* (2012.01)

(86) Internationale Anmeldenummer:
**PCT/EP2011/063345**

(87) Internationale Veröffentlichungsnummer:
**WO 2012/038137 (29.03.2012 Gazette 2012/13)**

(54) **VERFAHREN ZUR STEUERUNG VON SCHALTUNGEN EINES FAHRZEUGGETRIEBES**

METHOD FOR CONTROLLING SHIFTS IN A VEHICLE TRANSMISSION

PROCÉDÉ DE COMMANDE DE CHANGEMENTS DE VITESSE D'UNE BOÎTE DE VITESSES DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2010 DE 102010041322**

(43) Veröffentlichungstag der Anmeldung:
**31.07.2013 Patentblatt 2013/31**

(73) Patentinhaber: **ZF Friedrichshafen AG**
**88038 Friedrichshafen (DE)**

(72) Erfinder:
• SCHNEIDER, Florian
  88161 Lindenberg (DE)
• MAIR, Roland
  88069 Tettnang (DE)

(56) Entgegenhaltungen:
**EP-A1- 1 624 232      DE-A1-102004 039 273
DE-A1-102005 033 027   DE-A1-102006 054 281
DE-A1-102008 001 200   US-A- 4 966 048**

EP 2 619 482 B1

**Beschreibung**

Die Erfindung betrifft ein Verfahren zur Steuerung von Schaltungen eines Fahrzeuggetriebes gemäß dem Oberbegriff des Patentanspruchs 1, wie offenbart in der EP-A1-1 624 232.

Aus Komfort- und Leistungsgründen werden in Nutzfahrzeugen zunehmend Lastschaltgetriebe eingesetzt. Dabei sind zugkraftunterbrechungsfrei schaltende Doppelkupplungsgetriebe besonders attraktiv. Getriebestrukturen von Doppelkupplungsgetrieben für Nutzfahrzeuge sind beispielsweise aus der DE 10 2005 033 027 A1 und der DE 10 2006 054 281 A1 bekannt. Ein Verfahren zur Steuerung von Schaltvorgängen an einem Doppelkupplungsgetriebe zeigt beispielsweise die DE 10 2004 039 273 A1.

Solche automatisierten Schaltgetriebe umfassen ein Vorgelegegetriebe oder mehrere hintereinander geschaltete Vorgelege-Getriebegruppen und gegebenenfalls ein nachgeordnetes Planetengetriebe. Die Gänge sind in zwei Gruppen unterteilt, wobei jeder Gruppe eine Kupplung der Doppelkupplung zugeordnet ist, über die eine sequenzielle, quasi zugkraftunterbrechungsfreie Schaltfolge realisierbar ist. Der Kraftfluss der Gänge kann in konventioneller Weise über eine Antriebswelle und eine Abtriebswelle verlaufen, oder sich über mehrfach wechselnde Wellen durch das Getriebe winden. Gegenüber reinen Lastschaltautomaten in Planetenbauweise haben automatisierte Schaltgetriebe Wirkungsgrad- und Kostenvorteile. Allerdings steigen mit zunehmender Gangzahl die Baugröße sowie der Konstruktionsaufwand und somit die Herstellungskosten.

Da in der Regel Nutzfahrzeuggetriebe, je nach Einsatzgebiet, zur Darstellung einer bestimmten Getriebespreizung für einen effizienten Betrieb eine relativ hohe Gangzahl benötigen, ist es zweckmäßig, auch Mischformen, so genannte Teildoppelkupplungsgetriebe, zu betrachten, bei denen neben einem lastschaltenden Getriebe oder Getriebeteil mit einer Doppelkupplung ein konventionelles, also zugkraftunterbrechend schaltendes Getriebeteil, bzw. ein nachgelagertes zugkraftunterbrechend schaltendes Getriebe angeordnet ist.

Teildoppelkupplungsgetriebe sind zudem, über ein Verteilergetriebe bzw. Achsgetriebe, vorteilhaft mit langen Übersetzungen an der Hinterachse von Nutzfahrzeugen kombinierbar, die einen Kraftstoff sparenden und emissionsarmen Betrieb des Antriebsmotors bei relativ niedrigen Drehzahlen ermöglichen. Dies führt jedoch aufgrund der eher geringen Drehmomentreserve in einem solchen Betriebsbereich tendenziell zu einer weiteren Erhöhung der ohnehin meist hohen Schalthäufigkeit in Nutzfahrzeuggetrieben und damit auch zu einer erhöhten Anzahl zugkraftunterbrochener Schaltvorgänge im konventionellen Getriebeteil.

Zugkraftunterbrochene Hochschaltvorgänge werden grundsätzlich immer problematischer, da zur Verringerung von Verlustmomenten in modernen Brennkraftmaschinen möglichst flache Drehzahlrücklaufgradienten bzw. Drehzahlreduzierungsgradienten angestrebt werden. Dies führt bei Hochschaltvorgängen entweder zu einem intensiveren Schlupfbetrieb an den beiden Kupplungen der Doppelkupplung, was sich insbesondere bei den häufigen Schaltvorgängen in Nutzfahrzeugen durch einen erhöhten Kupplungsverschleiß auswirkt, oder zu höheren Schaltzeiten und damit zu längeren ungünstigen Zugkraftunterbrechungen, da die jeweilige Synchronisierung der Kupplung mehr Zeit in Anspruch nimmt.

Um den Drehzahlrücklauf der Brennkraftmaschine zu beschleunigen kann zwar eine vorhandene Motorbremse des Nutzfahrzeugs während der Schaltungen aktiviert werden, dies führt jedoch zu Komforteinbußen im Fahrbetrieb aufgrund von deutlich spürbaren Ein- und Ausschaltzeiten und Betriebsgeräuschen sowie zu einem vorzeitigen Verschleiß hinsichtlich der hohen Zahl von Schaltzyklen. Eine Beschleunigung der Drehzahlanpassung bei Schaltvorgängen im konventionellen Getriebeteil von Teildoppelkupplungsgetrieben über die Motorbremse ist daher eher problematisch.

Die Synchronisierung, d.h. die Drehzahlanpassung der zu schaltenden Komponenten bei einem Schaltvorgang, kann auch durch eine vorhandene Getriebebremse unterstützt werden. Im Falle von unsynchronisierten Klauenschaltelementen kann die Synchronisierung bei Hochschaltungen vollständig über die Getriebebremse erfolgen. Allerdings benötigt eine solche Zusatzbremse eine entsprechend ihrer erforderlichen Leistungsfähigkeit und Schalthäufigkeit angepasste Auslegung, die einen relativ großen Bauraum einnehmen kann und entsprechend kostenaufwendig ist. Eine Beschleunigung der Drehzahlanpassung bei Schaltvorgängen im konventionellen Getriebeteil von Teildoppelkupplungsgetrieben ausschließlich über eine Getriebebremse ist daher nicht optimal.

Vor diesem Hintergrund liegt der Erfindung die Aufgabe zugrunde, ein Verfahren zur Steuerung von Schaltvorgängen in einem zugkraftunterbrechend schaltenden Getriebeteil eines Teildoppelkupplungsgetriebes oder in einem dem Teildoppelkupplungsgetriebe nachgelagerten Getriebe in einem Fahrzeug anzugeben, dass kurze Schaltzeiten ermöglicht und dennoch einen komfortablen sowie zuverlässigen Fahrbetrieb gewährleistet.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei Getrieben, die aus einem Doppelkupplungsgetriebe und einem nachgeordneten konventionellen Getriebe bestehen, während der erforderlichen Drehzahlanpassung bei einer Schaltung des konventionellen Getriebeteils, die Synchronisation bzw. Drehzahlanpassung der zu schaltenden Komponenten zeitlich verkürzt werden kann, indem beide Kupplungen der Doppelkupplung vorübergehend in Schließrichtung angesteuert bzw. betrieben werden.

Demnach sollen, insbesondere bei einem Hochschaltvorgang im konventionellen Getriebeteil, die beiden Kupplungen gegeneinander verspannt werden, so dass ein resultierendes Bremsmoment auf den Antriebsmotor und den angekoppelten Getriebeeingang des konventionellen Getriebeteils bzw. des Getriebeausgangs des Doppelkupplungsgetriebeteils entsteht. Dabei wirkt sich die Abbremsung nicht störend auf den Fahrbetrieb aus, da während der Schaltung im konventionelle Getriebeteil zwischen dem Auslegen des Ursprungsganges und dem Einlegen des Folgeganges das Getriebe in Neutral geschaltet ist und somit der Antriebsstrang zu den angetriebenen Fahrzeugrädern im Kraftfluss unterbrochen ist. Diese notwendige Unterbrechung wird durch die beschleunigte Drehzahlangleichung signifikant verkürzt.

Demnach geht die Erfindung gemäß den Merkmalen des Hauptanspruchs aus von einem Verfahren zur Steuerung von Schaltungen eines Fahrzeuggetriebes, beispielsweise eines Nutzfahrzeuges, mit einem als ein zugkraftunterbrechungsfrei schaltendes Doppelkupplungsgetriebe ausgebildeten Getriebe oder Teilgetriebe, welchem eine Doppelkupplung mit einer ersten Kupplung und einer zweiten Kupplung zugeordnet sind, die mit einem Antriebsmotor wirkverbindbar sind, und mit einem dem Doppelkupplungsgetriebe in einem Antriebsstrang nachgelagerten, als ein zugkraftunterbrechend schaltendes Hauptgetriebe ausgebildeten Getriebe oder Teilgetriebe. Zur Lösung der gestellten Aufgabe sieht die Erfindung vor, dass die Doppelkupplung durch Verspannen der beiden Kupplungen bei Schaltungen des dem Doppelkupplungsgetriebe nachgelagerten Hauptgetriebes als eine Getriebebremse und/oder eine Motorbremse für eine Drehzahlanpassung zu schaltender Komponenten angesteuert wird.

Das Verfahren kann vorteilhaft sowohl bei Anordnungen angewandt werden, die ein Getriebe mit einem motorseitigen Doppelkupplungsgetriebeteil und einem nachfolgenden konventionellen, d.h. zugkraftunterbrechend schaltenden Getriebeteil aufweisen, als auch bei Anordnungen die ein vollständiges Doppelkupplungsgetriebe und ein nachgelagertes konventionelles Getriebe, beispielsweise ein schaltbares Verteiler- oder Achsgetriebe, umfassen. Jeder Kupplung des Doppelkupplungsgetriebes bzw. Doppelkupplungsgetriebeteils ist ein jeweils ein- oder mehrgängiger Doppelkupplungsgetriebezweig zugeordnet.

Im Folgenden wird unter dem Begriff "Doppelkupplungsgetriebe" sowohl ein vollständiges Getriebe als auch ein Getriebeteil verstanden. Als "Hauptgetriebe" wird ein Getriebe oder Getriebeteil verstanden, welches im Kraftfluss nach dem Doppelkupplungsgetriebe bzw. Doppelkupplungsgetriebeteil folgt und in seiner Ausführung einem klassischen Stufengetriebe entspricht, welches unsynchronisiert mit Klauenschaltelementen oder synchronisiert mit Synchronschaltpaketen ausgebildet sein kann.

Durch das erfindungsgemäße Verfahren werden die Nachteile der Zugkraftunterbrechung in einem konventionellen Getriebeteil unter Verwendung der Eigenschaften einer Doppelkupplung weitgehend reduziert, so dass ein Nutzfahrzeuggetriebe mit einer relativ hohen Gangzahl als Teildoppelkupplungsgetriebe hergestellt werden kann, welches weitgehend die Komfortvorteile eines Lastschaltgetriebes besitzt, dabei aber kompakt bauend und kostengünstiger ist. Zudem kann eine gegebenenfalls vorhandene Getriebebremse für eine geringere Belastung und damit kleiner sowie kostengünstiger ausgelegt werden, da durch die Verspannung der Doppelkupplung die Funktionalität einer Getriebebremse mit einem sehr hohen Bremsmoment und hoher Leistungsfähigkeit darstellbar ist.

Zweckmäßigerweise wird bei dem Verfahren zwischen einem ersten Schaltablauf, bei dem zu Beginn der Drehzahlanpassung beide Kupplungen zumindest weitgehend drehmomentfrei sind, und einem zweiten Schaltablauf, bei dem zu Beginn der Drehzahlanpassung eine der beiden Kupplungen drehmomentfrei ist und die andere der beiden Kupplungen ein Drehmoment im Haften überträgt, unterschieden. Die Funktionalität der Doppelkupplung als Getriebebremse wird in der Regel nur für Hochschaltungen benötigt, da dabei die Motor- und Getriebeeingangsdrehzahl nach der Schaltung niedriger ist als vorher.

Bei der Drehzahlanpassung wird vorzugsweise eine der beiden Kupplungen im Haften und die andere der beiden Kupplungen im Schlupf betrieben. Dabei wird oder bleibt die Kupplung, welche im Haften betrieben werden soll, unter Berücksichtigung relevanter Übersetzungsverhältnisse mindestens soweit geschlossen, dass sie ein bestimmtes Verspannungsmoment übertragen kann, ohne zu schlupfen. Hingegen wird die Kupplung, welche im Schlupf betrieben werden soll, unter Berücksichtigung relevanter Übersetzungsverhältnisse nur soweit geschlossen, dass ein bestimmtes Verspannungsmoment an der haftenden Kupplung noch übertragen werden kann ohne dass diese ins Schlupfen gerät.

Grundsätzlich ist es auch möglich, dass sich bei der Drehzahlanpassung beide Kupplungen im Schlupf befinden, während im konventionellen Getriebeteil kein Gang eingelegt ist. Allerdings ist eine simultane genaue Regelung beider Kupplungsmomente im Schlupfbetrieb relativ anspruchsvoll.

Der erste Schaltablauf stellt eine normale Schaltung dar, bei dem keine permanente Kopplung von Antriebmotor und Getriebeeingang besteht. Hierbei wird das Motormoment durch einen Eingriff der Getriebesteuerung verringert und die aktuell lastführende Kupplung geöffnet bzw. momentfrei gesteuert. Der Gang wird ausgelegt, sobald der Antriebsstrang momentfrei ist, wobei beide Kupplungen geöffnet bzw. nahezu geöffnet oder zumindest momentfrei sind. Die Drehzahl des Getriebeeingangs muss nun soweit verzögert werden, dass die Schaltpartner, beispielsweise Klauen, für den neuen Gang im Hauptgetriebe synchron laufen. Dazu wird erfindungsgemäß nach bestimmten Kriterien eine der beiden Kupplungen geschlossen und die andere permanent im Schlupf betrieben, wodurch der Getriebeeingang und in der Folge der Antriebsmotor abgebremst werden. Dabei wird das Drehmoment an den Kupplungen so eingestellt, dass der Motor und der Getriebeeingang zunächst bis zu einer Zieldrehzahl verzögert werden. Anschließend wird diese Drehzahl für den Schaltvorgang vorgehalten, indem vorzugsweise die schlupfende Kupplung oder beide Kupplungen wieder geöffnet bzw. momentfrei gestellt werden, und damit die Kupplungsverspannung gemindert oder aufgehoben wird.

Soweit erforderlich, kann eine Motorsteuerung die Drehzahl regeln. Während der Abbremsung wird vorteilhaft durch einen Eingriff in die Motorsteuerung eine Kraftstoffeinspritzung ausgeschaltet, um sicherzustellen, dass der Motor nicht gegen die als Getriebebremse fungierende Doppelkupplung arbeitet. Sobald der Synchronlauf erreicht ist, wird der neue Gang eingeschaltet, die lastführende Kupplung geschlossen und die andere Kupplung, soweit noch nicht erfolgt, vollständig geöffnet. Der Lastaufbau im Antriebsstrang beginnt typischerweise mit einem Motormoment, dass gerade dem vorherigen Verspannungsmoment der Kupplungen entspricht und steigt in dem Maße des Abbaus des Verspannungsmomentes.

Der zweite Schaltablauf stellt eine Schaltung mit geschossener bzw. teilgeschlossener Kupplung während des Lastabbaus, der Getriebeschaltung und des Lastaufbaus dar. Hierbei wird das Motormoment verringert, wobei zumindest eine der beiden Kupplungen ganz oder teilweise geschlossen ist und bleibt. Der Gang wird ausgelegt, sobald der Antriebsstrang hinreichend momentfrei ist, wobei zumindest eine Kupplung drehmomentübertragend ist. Der Getriebeeingang muss nun zusammen mit dem Antriebsmotor hinsichtlich ihrer Drehzahlen soweit verzögert werden, dass die Schaltpartner, beispielsweise Klauen, für den neuen Gang im Hauptgetriebe synchron laufen. Dazu wird erfindungsgemäß auch die zweite Kupplung zumindest teilweise geschlossen, so dass eine Kupplung permanent im Schlupf betrieben wird und ein Bremsmoment aufgebaut wird, während die andere Kupplung haftet, sich also im Reibschluss befindet. Der weitere Schaltablauf entspricht dem normalen Schaltablauf.

Ziel des Verfahrens ist es, zur Durchführung einer Schaltung im Hauptgetriebe eine Verspannung der Doppelkupplung derart zu steuern, dass mit einer geeigneten Kombination aus einer schlupfenden und einer geschlossenen Kupplung, gegebenenfalls mit einer Wahl einer Übersetzung in einem zugeordneten Doppelkupplungsgetriebezweig, eine minimale Zeitdauer für die Drehzahlanpassung erreicht wird, wobei Komfort- und Verschleißgesichtspunkte berücksichtigt werden sollen.

Dazu wird vorteilhaft für jeden Schaltvorgang im Hauptgetriebe jeweils die schneller und die langsamer laufende der beiden Kupplungen ermittelt, sofern mindestens ein Doppelkupplungsgetriebezweig des Doppelkupplungsgetriebes mehr als ein Gang besitzt. Andernfalls kann die schneller und die langsamer laufende der beiden Kupplungen in einer Steuerung vorab abgespeichert werden.

Da die beiden Doppelkupplungsgetriebezweige entsprechend ihrer Gänge unterschiedlich übersetzt sein können, drehen die beiden Eingangswellen der Getriebezweige und damit die Kupplungen mit unterschiedlichen Geschwindigkeiten, wenn sich die Abtriebswelle des Doppelkupplungsgetriebes dreht. Bei dem Verspannen der Doppelkupplung ist somit mindestens eine der beiden Kupplungen schlupfend anzusteuern, die andere Kupplung kann geschlossen sein. Die Kupplung, die demjenigen Getriebezweig zugeordnet ist, dessen Gang das größere der beiden Übersetzungsverhältnisse aufweist, wird entsprechend ihrer höheren Drehzahl als schnellere Kupplung bezeichnet. Wenn ein oder beide Doppelkupplungsgetriebezweige mehr als ein Gang besitzen, also selbst Stufengetriebe darstellen, kann demnach, je nach eingelegten Gängen in den Getriebezweigen, die schnellere und die langsamere Kupplung wechseln. Weisen die beiden Getriebezweige hingegen jeweils ein festes Übersetzungsverhältnis auf, ist die schneller und die langsamer laufende Kupplung festgelegt.

Außerdem kann vorgesehen sein, dass die Schaltungen kategorisiert werden. Dazu werden vorzugsweise folgende Kriterien angesetzt, die für eine Wahl eines bestimmten Ablaufs der Drehzahlanpassung herangezogen werden können:

a) Gangwechsel im Doppelkupplungsgetriebe und im Hauptgetriebe mit Wechsel der lastführenden Kupplung oder alleiniger Gangwechsel im Hauptgetriebe, wobei als lastführende Kupplung diejenige Kupplung des Doppelkupplungsgetriebes verstanden wird, die außerhalb eines Schaltvorgangs geschlossen, also drehmomentführend ist. Die lastführende Kupplung kann vor und nach einem Schaltvorgang identisch sein oder wechseln.

b) Wechselrichtung der Kupplungen von der schnelleren auf die langsamere Kupplung oder umgekehrt.

c) Schließgrade der ersten Kupplung und der zweiten Kupplung. Durch den jeweiligen Schließgrad der Kupplungen kann bei einem Einsatz der Doppelkupplung als Getriebebremse zur Drehzahlanpassung vorgegeben oder beeinflusst werden, welche der beiden Kupplungen bei der Verspannung der Doppelkupplung im Haften und welche im Schlupf betrieben werden soll.

Die Wahl, welche Kupplung im Haften und welche im Schlupf betrieben wird, ist maßgebend für die Getriebebremsfunktionalität der Doppelkupplung. Insbesondere wird dadurch festgelegt,

- welches Bremsmoment auf den Antriebsmotor ausgeübt werden kann, da dies von den Übersetzungsverhältnissen

**4**

der eingelegten Gänge in den Doppelkupplungsgetriebezweigen abhängt,

- welche Drehzahldifferenz am Antriebsmotor überwunden werden muss, bis im Hauptgetriebe ein Synchronlauf zum Einschalten des Zielganges erreicht ist,
- welche Reibarbeit in der schlupfenden Kupplung zusätzlich aufgenommen werden muss,
- welche bzw. wie viele Aktuatorbewegungen für den Schaltvorgang erforderlich sind, und
- daraus folgend, welche Schaltzeit letztlich erreichbar ist.

Die Ansteuerung der Doppelkupplung erfolgt vorteilhaft in Abhängigkeit von verschiedenen Zielkriterien, wie beispielsweise der Performance bzw. Leistung, dem Komfort und dem Verschleiß.

Insbesondere kann für performanceorientierte Schaltungen vorgesehen sein, dass die Kupplung, welche im Schlupf betrieben soll, und die Kupplung, welche im Haften betrieben werden soll, derart gewählt werden, dass sich eine möglichst kurze Zeit für die Drehzahlanpassung ergibt. Dazu kann eine Berechnung oder Abschätzung der Zeitdauer beider Varianten durchgeführt und diejenige gewählt werden, welche die kürzeste Schaltzeit bis zum Gangeinschalten ermöglicht.

Ist bei dem betreffenden Schaltvorgang dieselbe Kupplung eines Doppelkupplungsgetriebezweiges vor und nach der Schaltung lastführend, dann kann außerdem in dem anderen, aktuell ungenutzten Doppelkupplungsgetriebezweig, sofern dieser Getriebezweig mehr als ein Gang besitzt, ein Gang derart gewählt werden, dass sich eine möglichst kurze Zeit für die Drehzahlanpassung ergibt. Dazu kann eine Berechnung oder Abschätzung der Zeitdauer für jeden der möglichen Gänge durchgeführt und derjenige gewählt werden, welcher die kürzeste Schaltzeit bis zum Gangeinschalten ermöglicht.

Bei einer vergleichenden mathematischen Betrachtung der Drehmomentverhältnisse und Drehzahlverhältnisse unter Berücksichtigung der Übersetzungen und Massenträgheiten eines Getriebesystems aus einem Doppelkupplungsgetriebeteil und einem nachgeschalteten konventionellen Getriebeteil hat sich überraschenderweise herausgestellt, dass aufgrund von gegenläufigen Einflüssen keine einfache Festlegung, welche der beiden Kupplungen beim Verspannen der Doppelkupplung zum Zwecke einer möglichst schnellen Drehzahlanpassung bei einer zugkraftunterbrechenden Schaltung im Hauptgetriebe in vorteilhafter Weise im Haften bzw. im Schlupf während des Bremsvorgangs zu betreiben ist, möglich ist. Vielmehr ist die Zeitdauer jeweils abzuschätzen und aus dem Ergebnis die jeweils haftende Kupplung zu bestimmen.

Die Auswahl der Kupplungen für Schlupf- und Haftbetrieb sowie der verfügbaren Gänge im aktuell ungenutzten Doppelkupplungsgetriebezweig kann in vorteilhafter Weise derart erfolgen, dass zunächst die Zeitdauer für die Drehzahlanpassung für jede Kombination von Kupplung und Gang bestimmt und anschließend die Kombination mit der geringsten Zeitdauer gewählt wird. Eine Zeitabschätzung bzw. Berechnung für die Drehzahlanpassung kann anhand von vorgegebenen, gemessenen oder über Algorithmen berechneten Parametern oder daraus abgeleiteten relevanten Größen durchgeführt werden. Als wesentliche Einflussfaktoren auf die erreichbare Schaltzeit werden neben den Übersetzungsverhältnissen im Doppelkupplungsgetriebe, dem gangwechselbedingten Drehzahlabfall im Doppelkupplungsgetriebe und der Änderung der Abtriebsdrehzahl im Doppelkupplungsgetriebe, maximal übertragbare Momente der beiden Kupplungen, ein effektiv wirksames Massenträgheitsmoment sowie die abzubauende Motordrehzahldifferenz und das erzeugte Bremsmoment auf den Antriebsmotor berücksichtigt.

Die Zeitdauer der Drehzahlanpassung über ein Verspannen der Doppelkupplung mit einer haftenden und einer schlupfenden Kupplung einschließlich Gangwechsel im Doppelkupplungsgetriebe bis zum Synchronlauf der zu schaltenden Komponenten, bei dem ein Zielgang im Hauptgetriebe eingelegt werden kann, lässt sich aus der allgemeinen Bewegungsgleichung $M = J(d\omega / dt)$ für ein rotierendes System, mit M = resultierendes Moment, J = Trägheitsmoment, $\omega$ = Winkelgeschwindigkeit, ableiten. Zur Vereinfachung werden per Definition die schnellere Kupplung jeweils mit K1 und die langsamere Kupplung mit K2 bezeichnet, und die Indizes entsprechenden verwendet.

Danach ergibt sich, wenn während der Drehzahlanpassung die eine Kupplung K1 im Haften ist, die Synchronisationszeit durch die Gleichung

$$\Delta t\_1 = \Delta\omega\_M1 / tq\_M1 \cdot J\_M\_Red\_1,$$

mit einem Bremsmoment tq_M1 am Antriebsmotor von

$$tq\_M1 = -\left| tq\_K2 \right| \cdot (1 - i\_2 / i\_1),$$

mit einem Kupplungsmoment tq_K2, einer Übersetzung i_1 und einer Übersetzung i_2 der beiden Doppelkupplungsgetriebezweige, und mit einem auf die Motorebene reduzierten gesamten Massenträgheitsmoment

$$J\_M\_Red\_1 = J\_M + J\_M\_Red\_ab\_1 + J\_M\_Red\_K2$$
$$= J\_M + J\_ab / i^2\_1 + (J\_K2 \cdot i^2\_2) / i^2\_1,$$

wobei die Gleichung enthält ein Massenträgheitsmoment J_M des Antriebsmotors, ein Massenträgheitsmoment J_ab am Abtrieb, ein Massenträgheitsmoment J_K2 der Kupplung K2, ein Massenträgheitsmoment des Abtriebs J_M_Red_ab_1 bezogen auf die Motorebene, ein Massenträgheitsmoment J_M_Red_K2 der Kupplung K2 bezogen auf die Motorebene,

sowie eine Drehzahldifferenz Δn_M11 am Antriebsmotor für die Schaltung, wenn die Kupplung K1 lastführend war gemäß der Gleichung

$$\Delta n\_M11 = \Delta n\_M12 \cdot (\Delta\omega\_M1 / \Delta\omega\_M2) = n\_ab\_1 \cdot i\_1 - n\_ab\_0 \cdot i\_1$$

mit einer Abtriebsdrehzahl n_ab_1 am Doppelkupplungsgetriebe nach der Schaltung und mit einer Abtriebsdrehzahl n_ab_0 am Doppelkupplungsgetriebe vor der Schaltung,

und eine Drehzahldifferenz Δn_M21 am Antriebsmotor für die Schaltung, wenn Kupplung K2 lastführend war gemäß der Gleichung

$$\Delta n\_M21 = \Delta n\_M22 \cdot (\Delta\omega\_M1 / \Delta\omega\_M2) = n\_ab\_1 \cdot i\_1 - n\_ab\_0 \cdot i\_2.$$

Analog ergibt sich, wenn während der Drehzahlanpassung die andere Kupplung K2 im Haften ist, eine Synchronisationszeit gemäß der Gleichung

$$\Delta t\_2 = \Delta\omega\_M2 / tq\_M2 \cdot J\_M\_Red\_2,$$

mit einem Bremsmoment tq_M2 am Antriebsmotor von

$$tq\_M2 = -\left| tq\_K1 \right| \cdot (1 - i\_1 / i\_2),$$

mit einem Kupplungsmoment tq_K1, einer Übersetzung i_1 und einer Übersetzung i_2 der beiden Doppelkupplungsgetriebezweige, sowie mit einem auf die Motorebene reduzierten gesamten Massenträgheitsmoment

$$J\_M\_Red\_2 = J\_M + J\_M\_Red\_ab\_2 + J\_M\_Red\_K1$$
$$= J\_M + J\_ab / i^2\_2 + (J\_K1 \cdot i^2\_1) / i^2\_2,$$

mit einem Massenträgheitsmoment J_M des Antriebsmotors, einem Massenträgheitsmoment J_ab am Abtrieb, einem Massenträgheitsmoment J_K1 der Kupplung K1, einem Massenträgheitsmoment J_M_Red_ab_2 des Abtriebs bezogen auf die Motorebene und mit einem Massenträgheitsmoment J_M_Red_K1 der Kupplung K1 bezogen auf die Motorebene, sowie eine Drehzahldifferenz Δn_M22 am Antriebsmotor für die Schaltung, wenn Kupplung K2 lastführend war gemäß der Gleichung

$$\Delta n\_M22 = \Delta n\_M21 \cdot (\Delta\omega\_M2 \,/\, \Delta\omega\_M1) = n\_ab\_1 \cdot i\_2 - n\_ab\_0 \cdot i\_2,$$

mit einer Abtriebsdrehzahl n_ab_1 am Doppelkupplungsgetriebe nach der Schaltung und mit einer Abtriebsdrehzahl n_ab_0 am Doppelkupplungsgetriebe vor der Schaltung,
sowie eine Drehzahldifferenz Δn_M12 am Antriebsmotor für die Schaltung, wenn Kupplung K2 lastführend war gemäß der Gleichung

$$\Delta n\_M12 = \Delta n\_M11 \cdot (\Delta\omega\_M2 \,/\, \Delta\omega\_M1) = n\_ab\_1 \cdot i\_2 - n\_ab\_0 \cdot i\_1.$$

Bei der Bestimmung des effektiven Massenträgheitsmomentes können außerdem vorteilhaft vorhandene, bedarfsweise ankoppelbare bzw. abkoppelbare Nebenabtriebskomponenten entsprechend ihrem Betriebszustand sowie aktuelle Verschleißzustände der beiden Kupplungen berücksichtigt werden.

Bei der Bestimmung der abzubauenden Motordrehzahldifferenz am Antriebsmotor kann auch eine prognostizierte Änderung der Fahrzeuggeschwindigkeit berücksichtigt werden.

Weiterhin geht in die Bestimmung der Motordrehzahldifferenz gegebenenfalls eine Drehzahländerung des Antriebsmotors aufgrund einer Zeitverzögerung durch einen Gangwechsel im freien Doppelkupplungsgetriebezweig ein. Diese Zeitverzögerung selbst ist in der Folge bei der Bestimmung der Zeitdauer für die Drehzahlanpassung zu berücksichtigen. Dieser Fall kann eintreten, wenn sich annähernd zeitgleich mit dem Auslösen der Schaltung im Hauptgetriebe auch der Gang im aktuell freien Doppelkupplungsgetriebezweig ändert und der Schaltvorgang im Doppelkupplungsgetriebe länger dauert als der Schaltvorgang im Hauptgetriebe.

Bei der Bestimmung des Motorbremsmomentes werden maximale Kupplungsmomente, welche nicht überschritten werden können oder dürfen, oder deren Überschreiten unverhältnismäßig lange dauern würde, berücksichtigt.

Weiterhin wird bei der Bestimmung des Motorbremsmomentes vorzugsweise ein mittleres Kupplungsmoment der schlupfenden Kupplung angenommen. Dadurch kann berücksichtigt werden, dass die Kupplung nicht von Beginn ihrer Ansteuerung an ein als Getriebebremse vorgesehenes Enddrehmoment überträgt, da dieses zunächst aufgebaut werden muss. Das mittlere Kupplungsmoment kann beispielsweise durch eine Wichtung des Enddrehmomentes definiert werden. Sinnvollerweise liegt der Wert umso näher an dem Enddrehmoment, je größer die zu überwindende Drehzahldifferenz für die Drehzahlanpassung ist, da die Drehzahlanpassung bei großen Drehzahldifferenzen mehr Zeit in Anspruch nimmt, so dass die Drehmomentaufbauphase an Bedeutung verliert.

Außerdem kann vorgesehen sein, dass ein Gangwechsel im aktuell ungenutzten Doppelkupplungsgetriebezweig prädiktiv, also vorausschauend durchgeführt wird, wenn die lastführende Kupplung durch die zu erwartende folgende Schaltung unverändert bleibt. Dadurch kann das bei Doppelkupplungsgetrieben übliche Vorgehen, im gerade ungenutzten Getriebezweig bereits einen Gang vorzuwählen, ausgenutzt werden, um bei der Drehzahlanpassung keine unnötige Verzögerung durch den Schaltvorgang im Doppelkupplungsgetriebezweig zu erzeugen. Dies kann immer dann erfolgen, wenn ein geeigneter Gang im freien Doppelkupplungsgetriebezweig für die Drehzahlanpassung ermittelt ist und kein Wechsel der lastführenden Kupplung für den eigentlichen Schaltvorgang im Hauptgetriebe vorgesehen ist.

Bei komfortorientierten Schaltungen wird ein guter Schaltkomfort gegenüber einer kurzen Schaltdauer vorgezogen. Dazu sollen möglichst keine aus Kupplungsbetätigungen herrührende Störungen auftreten oder wahrnehmbar sein. Dies ist dann gegeben, wenn an der nach der Schaltung lastführenden Kupplung beim Gangeinschalten kein Schlupf abzubauen ist, weil sich die Kupplung bereits im Synchronlauf befindet. Bei der Ansteuerung der Doppelkupplung als Getriebebremse ist dies immer dann erfüllt, wenn die Kupplung, welche während der Schaltung im Haften ist, auch diejenige ist, die nach der Schaltung lastführend wird, so dass unmittelbar nach dem Gangeinlegen der Lastaufbau beginnen kann. Daher ist für komfortorientierte Schaltungen vorteilhaft vorgesehen, dass diejenige Kupplung während der Drehzahlanpassung ins Haften gebracht wird, die nach der Schaltung die lastführende Kupplung sein wird.

Weiterhin können Maßnahmen zum Schutz der Doppelkupplung vorgesehen sein. Das Abbremsen von Antriebsmotor und Getriebeeingang über ein Verspannen der Doppelkupplung hat zur Folge, dass in die jeweils schlupfende Kupplung Reibarbeit eingetragen wird. Daher kann vorgesehen sein, dass die jeweils als schlupfende Kupplung gewählte Kupplung nur dann zur Betätigung als eine Getriebebremse angesteuert wird, wenn bei einer aktuell festgestellten Belastung eine vorab bestimmte Belastungsreserve der Kupplung dies zulässt, und dass andernfalls die andere der beiden Kupplungen als die schlupfende Kupplung angesteuert wird oder auf eine Ansteuerung der Doppelkupplung als Getriebebremse bzw. Motorbremse verzichtet wird.

Die Belastungsreserve wird so gewählt, dass ein kritischer Belastungsgrenzwert keinesfalls überschritten wird. Dadurch kann die Doppelkupplung zuverlässig gegen einen vorzeitigen Verschleiß geschützt werden. Bei der Bestimmung der Belastungsreserve können jeweils kurzfristig zu erwartende nachfolgende Schaltvorgänge der Kupplung, beispielsweise belastungsintensive Anfahrvorgänge, sowie der durch eine entsprechende Fahrpedalbetätigung angezeigte jeweilige Fahrerwunsch berücksichtigt werden. Weiterhin können aktuelle Umgebungsbedingungen, wie Fahrbahnsteigung und der sich aus Luftwiderstand, Rollwiderstand, Steigungswiderstand und Beschleunigungswiderstand ergebende Fahrwiderstand berücksichtigt werden. Die Belastungsgrenze kann somit variieren. Außerdem kann der Einsatzbereich des Fahrzeuges, beispielsweise überwiegend Fernverkehrsfahrten oder Geländefahrten, berücksichtigt werden.

Da die beiden Kupplungen unterschiedlich ausgebildet sein können, wird für jede Kupplung individuell eine Prüfung der Belastungsgrenze durchgeführt. Darin werden zusätzlich kupplungsspezifische Kenngrößen, wie Kupplungsmasse, spezifische Wärmekapazität, Wärmeleitung, Einbausituation und ein daraus folgendes Abkühlverhalten bewertet. Demnach erfolgt die Ansteuerung der Doppelkupplung als eine Getriebebremse und/oder eine Motorbremse vorteilhaft nur dann, wenn eine prognostizierte relevante Kupplungsbelastung unter einem Grenzwert liegt, oder wenn eine aktuelle, um einen prognostizierten zusätzlichen Reibenergieeintrag erhöhte Kupplungsbelastung unter einem Grenzwert liegt.

Um die Getriebebremsfunktionalität der Doppelkupplung möglichst effektiv und effizient einzusetzen und nicht unnötigerweise Reibleistung in die Doppelkupplung einzutragen, kann außerdem vorgesehen sein, dass vor der Durchführung des Verfahrens bestimmte Randbedingungen sowie ein erreichbares, vorab definiertes Komfortmaß bzw. Performancemaß geprüft werden.

Insbesondere kann vorgesehen sein, dass die Ansteuerung der Doppelkupplung als eine Getriebebremse und/oder eine Motorbremse dann erfolgt, wenn eine schnelle Schaltung als notwendig bewertet ist und dies durch einen Fahrerwunsch oder eine aktive Kickdown-Stellung eines Fahrpedals angezeigt ist und/oder der aktuelle Fahrwiderstand vergleichsweise hoch ist.

Weiterhin erfolgt zweckmäßigerweise eine Drehzahlbeurteilung derart, dass die Ansteuerung der Doppelkupplung als eine Getriebebremse und/oder eine Motorbremse dann erfolgt, wenn eine Zieldrehzahl der Drehzahlanpassung größer oder gleich einer Leerlaufdrehzahl des Antriebsmotors ist, da ab der Leerlaufdrehzahl ein üblicherweise vorhandener Leerlaufregler gegen den Bremsvorgang wirksam ist. Dies kann umgangen werden, indem die Leerlaufregelung bei einem Unterschreiten der Leelaufdrehzahl durch einen Eingriff in eine Motorsteuerung temporär unterdrückt wird.

Möglich ist es auch, dass die Ansteuerung der Doppelkupplung als eine Getriebebremse und/oder eine Motorbremse bei Erreichen oder höchstens geringfügigem Unterschreiten der Leerlaufdrehzahl beendet wird. In diesem Fall kann der nicht aktiv gebremste Auslauf des Motors zum Erreichen der Synchrondrehzahl genügen oder gegebenenfalls eine vorhandene konventionelle Getriebebremse eingesetzt werden.

Zur Verdeutlichung der Erfindung ist der Beschreibung eine Zeichnung mit Ausführungsbeispielen beigefügt. In dieser zeigt

Fig. 1    eine schematische Darstellung eines Teildoppelkupplungsgetriebes zur Durchführung eines erfindungsgemäßen Verfahrens,

Fig. 2    ein Ersatzschaltbild des Teildoppelkupplungsgetriebes,

Fig. 3    ein Flussdiagramm zur Durchführung eines performanceorientierten erfindungsgemäßen Schaltablaufs,

Fig. 4    ein Flussdiagramm zur Durchführung eines komfortorientierten erfindungsgemäßen Schaltablaufs,

Fig. 5    ein Drehzahl- und Gangdiagramm zur Durchführung eines performanceorientierten erfindungsgemäßen Schaltablaufs mit Gangwechsel im Teildoppelkupplungsgetriebe,

Fig. 6    ein Gang-, Drehzahl- und Drehmomentdiagramm zur Erläuterung der Durchführung eines erfindungsgemäßen Schaltablaufs mit anfangs momentfreien Kupplungen,

Fig. 7    ein Gang-, Drehzahl- und Drehmomentdiagramm zur Erläuterung der Durchführung eines erfindungsgemäßen Schaltablaufs mit anfangs einer momentfreien Kupplung und einer geschlossenen Kupplung, sowie

Fig. 8   eine tabellarische Übersicht erfindungsgemäßer Schaltabläufe mit jeweiligen Kupplungsansteuerungen.

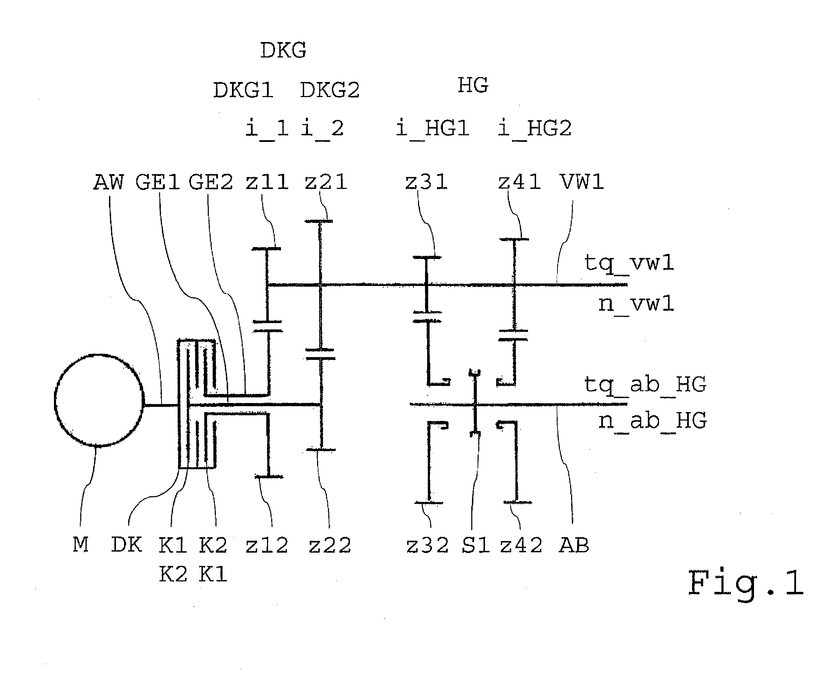

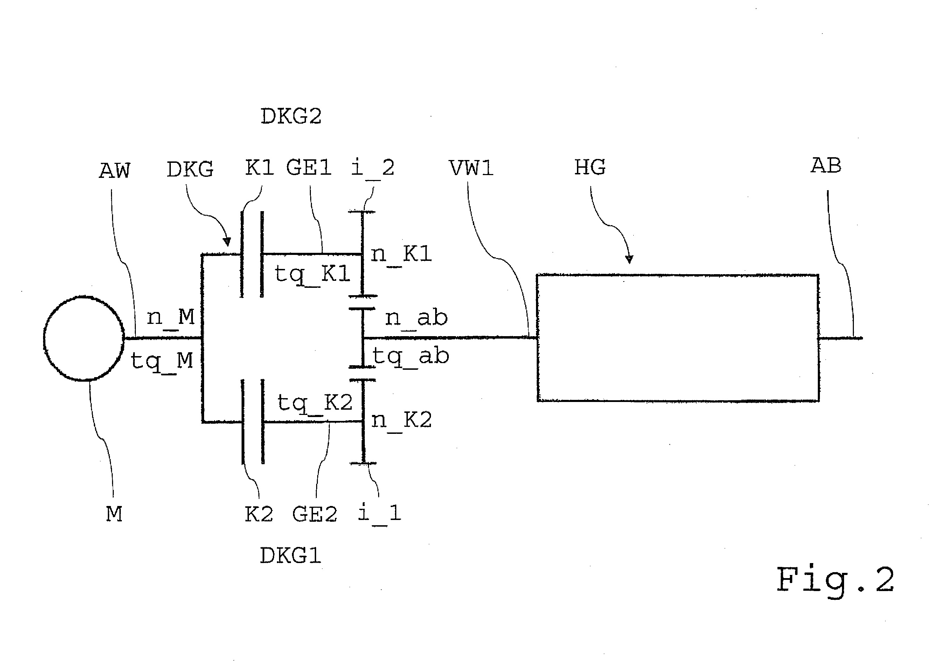

Demnach umfasst ein in Fig. 1 gezeigtes Teildoppelkupplungsgetriebe in Vorgelegebauweise ein als ein lastschaltbares Doppelkupplungsgetriebe DKG ausgebildetes erstes Teilgetriebe und ein als ein zugkraftunterbrechend schaltendes Hauptgetriebe HG ausgebildetes zweites Teilgetriebe. Ein zugehöriges Ersatzschaltbild zeigt Fig. 2. Das Doppelkupplungsgetriebe DKG weist eine Doppelkupplung DK mit einer ersten Kupplung K1 und einer zweiten Kupplung K2 auf. Da per Definition für ein erfindungsgemäßes Verfahren die schneller drehende Kupplung mit K1 und die langsamer drehende Kupplung mit K2 bezeichnet wird und die Indizes entsprechend verwendet werden, kann die Bezeichnung der Kupplungen wechseln. Eine Kupplungseingangsseite ist durch einen gemeinsamen Kupplungskorb dargestellt, der mit einer Antriebswelle AW eines als Verbrennungsmotor ausgebildeten Antriebsmotors M verbunden ist. Über die Antriebswelle AW ist ein Antriebsmoment $tq\_M$ mit einer Motordrehzahl $n\_M$ übertragbar.

Eine erste Getriebeeingangswelle GE1 ist an ihrem motorseitigen Ende mit der ersten Kupplung K1 und an ihrem getriebeseitigen Ende mit einem Zahnrad z22 fest verbunden. Über die erste Kupplung K1 ist ein Kupplungsmoment $tq\_K1$ übertragbar. Die Kupplungsausgangsseite bzw. das Zahnrad z22 drehen dabei mit einer ersten Kupplungsdrehzahl $n\_K1$. Das Zahnrad z22 steht im Eingriff mit einem auf einer Vorgelegewelle VW1 drehfest angeordneten Zahnrad z21. Das Zahnradpaar z21/z22 stellt eine zweite Eingangskonstante i2 dar, die mit der ersten Kupplung K1 einen einstufigen zweiten Doppelkupplungsgetriebezweig DKG2 bildet.

Eine zweite Getriebeeingangswelle GE2 ist als eine kürzere Hohlwelle über der ersten Getriebeeingangswelle GE1 angeordnet. Sie ist an ihrem motorseitigen Ende mit der zweiten Kupplung K2 und an ihrem getriebeseitigen Ende mit einem Zahnrad z12 fest verbunden. Über die zweite Kupplung K2 ist ein Kupplungsmoment $tq\_K2$ übertragbar. Die Kupplungsausgangsseite bzw. das Zahnrad z12 drehen dabei mit einer zweiten Kupplungsdrehzahl $n\_K1$. Das Zahnrad z12 steht im Eingriff mit einem auf der Vorgelegewelle VW1 drehfest angeordneten Zahnrad z11. Das Zahnradpaar z11/z12 stellt eine der zweiten Eingangskonstanten i2 axial vorgelagerte erste Eingangskonstante i1 dar, die mit der zweiten Kupplung K2 einen einstufigen ersten Doppelkupplungsgetriebezweig DKG1 bildet.

Das Doppelkupplungsgetriebe DKG entspricht in seiner Wirkungsweise hinsichtlich der Übersetzung einer Splittergruppe für eine nachfolgende Getriebegruppe. Im Fahrbetrieb ist stets ein Doppelkupplungsgetriebezweig DKG1 bzw. DKG2 über die zugehörige Kupplung K1 bzw. K2 lastführend bzw. aktiv, während der andere Zweig DKG1, DKG2 mit der zugehörigen andern Kupplung K1, K2 frei bzw. für die Drehmomentübertragung ungenutzt ist. Am Ausgang des Doppelkupplungsgetriebe DKG liegt demnach entweder ein Kupplungsmoment und eine Drehzahl des einen oder des anderen Doppelkupplungsgetriebezweiges DKG1, DKG2 an. Bei Schaltvorgängen mit einer Ansteuerung beider Kupplungen K1, K2 ergibt sich ein resultierendes Abtriebsmoment $tq\_ab$ und eine entsprechende Abtriebsdrehzahl $n\_ab$.

Dem Doppelkupplungsgetriebe DKG nachgeschaltet ist ein zweistufiges Hauptgetriebe HG mit einem ersten Hauptgetriebegang $i\_HG1$ und einem zweiten Hauptgetriebegang $i\_HG2$. Der erste Hauptgetriebegang $i\_HG1$ umfasst ein auf der Vorgelegewelle VW1 drehfest angeordnetes Zahnrad z31, das im Eingriff mit einem auf einer Abtriebswelle AB drehbar angeordneten Zahnrad z32 ist. Der zweite Hauptgetriebegang $i\_HG2$ umfasst ein auf der Vorgelegewelle VW1 drehfest angeordnetes Zahnrad z41, das im Eingriff mit einem auf einer Abtriebswelle AB drehbar angeordneten Zahnrad z42 ist. Die beiden Losräder z32, z42 sind über eine als Klauenkupplung ausgebildete unsynchronisierte Schalteinrichtung S1 wechselseitig mit der Abtriebswelle AB drehfest verbindbar. An der Vorgelegewelle VW1 liegt ein Antriebsmoment $tq\_vw1$ und ein Antriebsdrehzahl $n\_vw1$ an. Am Ausgang des Hauptgetriebes HG und damit des Gesamtgetriebes liegt ein resultierendes Abtriebsdrehmoment $tq\_ab\_HG$ und eine Abtriebsdrehzahl $n\_ab\_HG$ an, welche auf die angetriebenen Fahrzeugräder bzw. Achsen wirken.

Das gezeigte Teildoppelkupplungsgetriebe dient lediglich als vereinfachte Getriebestruktur zur Veranschaulichung der für die Durchführung eines nachfolgend beschriebenen erfindungsgemäßen Verfahrens relevanten Momente und Drehzahlen. Ein reales Nutzfahrzeug-Teildoppelkupplungsgetriebe kann beispielsweise zwei zweigängige Doppelkupplungsgetriebezweige und ein drei- oder viergängiges Hauptgetriebe aufweisen, so dass zwölf oder sechzehn Vorwärtsgänge und mindestens ein Rückwärtsgang zur Verfügung stehen.

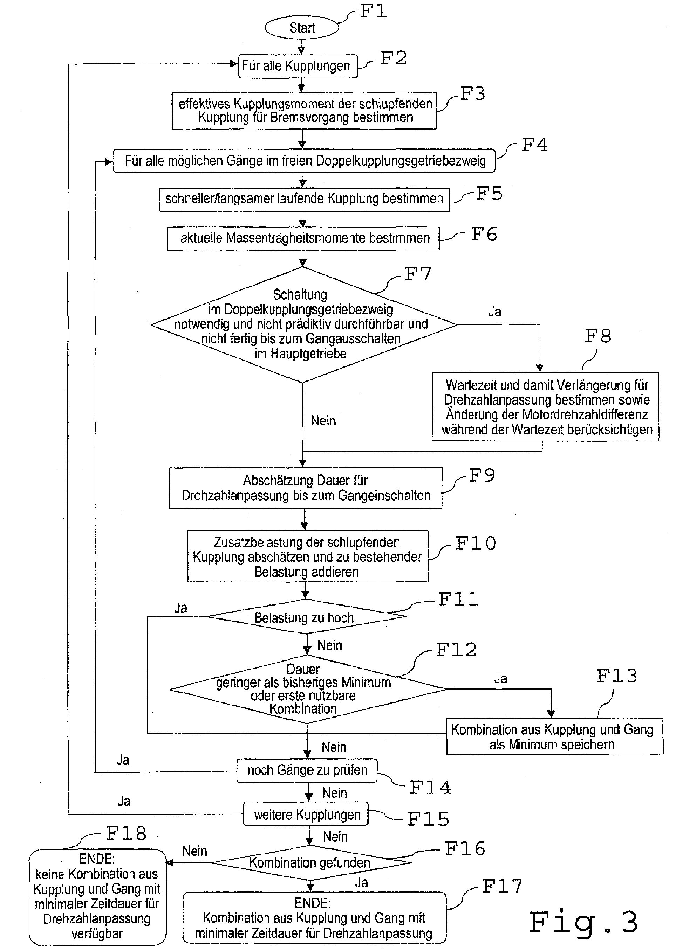

Fig. 3 zeigt einen erfindungsgemäßen Ablauf in Funktionsblöcken F1 bis F18 für Schaltungen mit maximaler Performance, d.h. mit einer möglichst kurzen Schaltzeit durch eine schnelle Drehzahlanpassung mittels einer Ansteuerung der Doppelkupplung DK bei einer Schaltung im Hauptgetriebe HG. Demnach wird bei einer Hochschaltung im Hauptgetriebe HG zunächst für beide Kupplungen K1, K2 ein effektives Kupplungsmoment $tq\_K$ im Schlupf für eine Getriebe-Motorbremsfunktion ermittelt (F1, F2, F3).

Für alle möglichen Gänge im freien, d.h. aktuell ungenutzten Doppelkupplungsgetriebezweig, wird anschließend jeweils die schnellere und langsamere Kupplung K1, K2 bestimmt (F4, F5).

Weiterhin werden die relevanten Massenträgheitsmomente J der rotierenden Massen für die Drehzahlanpassung bestimmt (F5).

Ist zur Beschleunigung der Abbremsung ein Gangwechsel im Doppelkupplungsgetriebe DKG zweckmäßig, jedoch nicht vorab schaltbar, da beispielsweise die lastführende Kupplung K1, K2 wechselt oder bis zum Einlegen von Neutral im Hauptgetriebe HG nicht abgeschlossen (F7), wird eine Wartezeit mit einer Drehzahländerung am Antriebsmotor M bestimmt (F8). Mit diesen Daten folgt eine Abschätzung der Zeitdauer $\Delta t$ für die Drehzahlanpassung (F9).

Dafür wird die Zusatzbelastung durch Reibenergieeintrag der schlupfenden Kupplung K1, K2 geprüft (F10). Liegt die Gesamtbelastung der Kupplung K1, K2 unterhalb eines kritischen Grenzwertes (F11), wird die gefundene Kombination aus schlupfender oder haftender Kupplung K1, K2 und Gang im Doppelkupplungsgetriebe DKG (F12) gegebenenfalls als ein temporäres Minimum gespeichert (F13).

Dieser Zyklus wird für alle Gänge und Kupplungen K1, K2 durchlaufen (F14, F15), wobei das jeweilige temporäre Minimum gegebenenfalls wiederholt überschrieben wird, bis die für den gewünschten Schaltvorgang beste, d.h. zur kürzesten Schaltzeit $\Delta t$ führende Kombination gefunden ist (F16, F17) und die Ansteuerung der Doppelkupplung DK und des Gangwechsels im Doppelkupplungsgetriebe DKG entsprechend eingeleitet werden kann. Wird keine passende Kombination mit zulässiger Kupplungsbelastung gefunden, endet das Verfahren (F18).

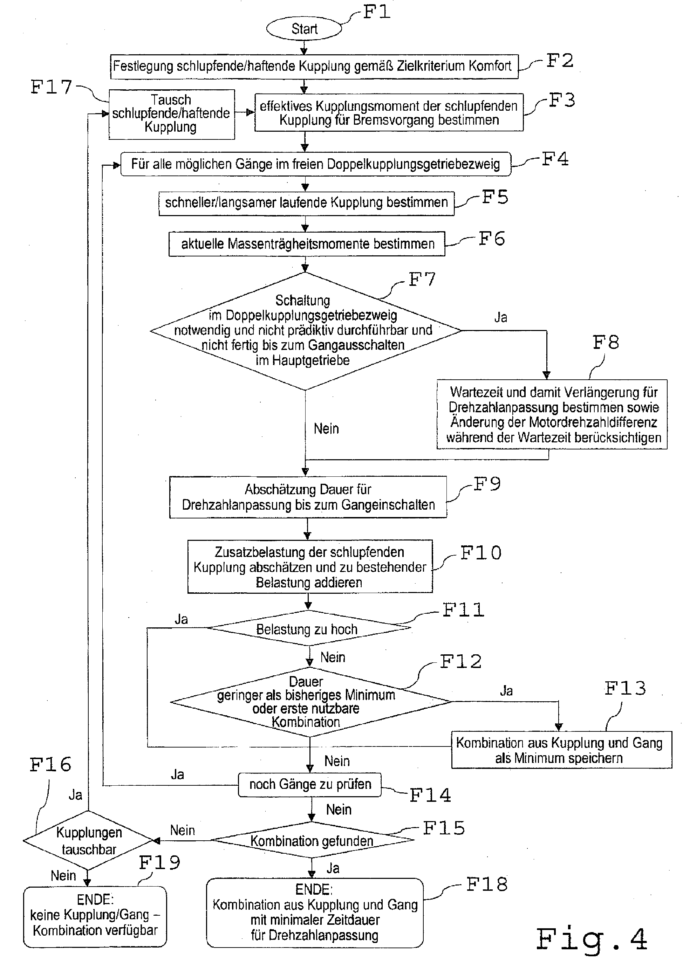

Fig. 4 zeigt einen erfindungsgemäßen Ablauf in Funktionsblöcken F1 bis F19 für Schaltungen mit maximalem Komfort, d.h. mit einer möglichst kurzen Schaltzeit durch eine schnelle Drehzahlanpassung, jedoch unter Berücksichtigung eines möglichst kontinuierlichem, schaltstoßfreien Übergangs vom Ursprungsgang zum Zielgang.

Zunächst wird die schlupfende bzw. haftende Kupplung K1, K2 festgelegt, derart, dass diejenige Kupplung K1, K2, die nach der Schaltung lastführend wird, während der Drehzahlanpassung im Haften ist, während die andere Kupplung K1, K2 für einen Schlupfbetrieb angesteuert wird (F2). Anschließend wird das Kupplungsmoment tq_K für den Schlupfbetrieb bestimmt (F3).

Die folgende Abschätzung der Dauer der Drehzahlanpassung in Kombination mit den Gängen des Doppelkupplungsgetriebes DKG wird wie beim Ablauf in Fig. 3 durchgeführt (F4 bis F14). Als Ergebnis kann eine komfortorientierte Kupplungs-Gang-Kombination ermittelt werden (F15, F18).

Wird keine Kombination mit einer Doppelkupplungsgetriebeübersetzung gefunden, insbesondere weil die prognostizierte Kupplungsbelastung zu hoch ist, erfolgt eine Prüfung eines Tausches der beiden Kupplungen K1, K2 (F16), gegebenenfalls unter Hinnahme von Komforteinbußen. Wird der Tausch durchgeführt (F17), folgt ein erneuter Durchlauf des Zyklus zur Bestimmung einer günstigen Kombination dieser Kupplung K1, K2 mit einem geeigneten Gang des Doppelkupplungsgetriebes DKG für die Drehzahlanpassung, um das Verfahren dennoch durchführen zu können oder nötigenfalls zu beenden.

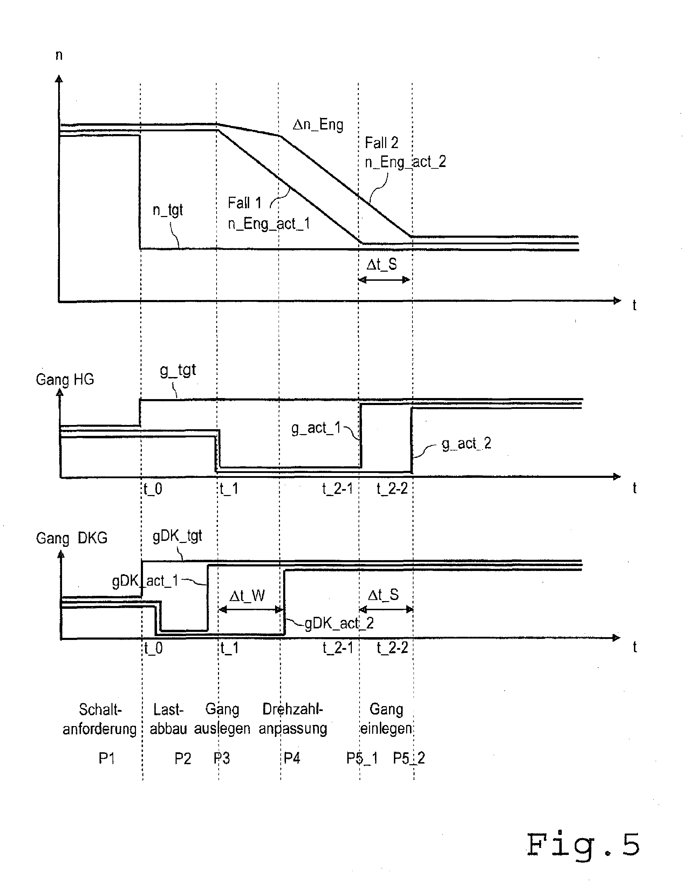

Fig. 5 zeigt ein Diagramm eines performanceorientierten erfindungsgemäßen Schaltablaufs, bei dem zur Schaltzeit verkürzenden Drehzahlanpassung mit Hilfe der Doppelkupplung DK bei einer Hochschaltung im Hauptgetriebe HG auch ein Gangwechsel im Doppelkupplungsgetriebe DKG durchgeführt werden soll. Dargestellt sind relevante zeitliche Drehzahlverläufe n(t) sowie Gangwechsel im Doppelkupplungsgetriebe DKG und im Hauptgetriebe HG. Der Schaltablauf ist in sechs Phasen P1 bis P6 unterteilt, von denen in Fig. 5 fünf explizit dargestellt sind, nämlich Phase P1 = Schaltanforderung, Phase P2 = Lastabbau, Phase P3 = Gang auslegen, Phase P4 = Drehzahlanpassung, Phase P5 = Gang einlegen, Phase P6 = Lastaufbau.

Die Ansteuerung der zumindest einen Kupplung beginnt nach einer Schaltanforderung zu einem Zeitpunkt t_0 (P1). Die aktuell lastführende Kupplung K1, K2 (und/oder Schaltkupplung) wird in Öffnungsrichtung angesteuert, der Lastabbau (P2) beginnt und die erforderliche Zieldrehzahl n_tgt am Antriebsmotor bzw. am Getriebeeingang für einen Zielgang wird ermittelt (Drehzahldiagramm). Der Zielgang g_tgt im Hauptgetriebe (Gang HG-Diagramm) und der Zielgang gDK_tgt im freien Doppelkupplungsgetriebezweig (Gang DKG-Diagramm) sind vorgewählt, wobei eine geeignete Kombination aus DKG-Gang und schlupfender Kupplung K1, K2 gemäß dem performanceorientierten Verfahrenszyklus (Fig. 3) für die Drehzahlanpassung bestimmt ist.

Zwei Fälle (Indizes 1 und 2) werden unterschieden: Im ersten Fall ist der DKG-Gang bereits prädiziert oder der Schaltvorgang im Doppelkupplungsgetriebe DKG erfolgt schneller als der Lastabbau (P2) im Hauptgetriebe HG. Beim Gangauslegen im Hauptgetriebe HG zum Zeitpunkt t1 (P3) ist der Gangwechsel von gDK_act_1 nach gDK_tgt im freien Doppelkupplungsgetriebezweig DKG1, DKG2 bereits abgeschlossen. Die aktiv kupplungsgesteuerte Drehzahlanpassung beginnt, die aktuelle Motor-Istdrehzahl n_Eng_act_1 fällt stetig ab. Zum Zeitpunkt t_2-1 (P5_1) ist der Synchronlauf erreicht. Der Zielgang g_act_1 = g_tgt im Hauptgetriebe HG wird eingelegt. Weder wird durch die Schaltung im Doppelkupplungsgetriebe DKG der Beginn des Drehzahlanpassungsverfahrens verzögert noch wird die Schaltung insgesamt verlängert.

Im zweiten Fall wird die Schaltung im aktuell ungenutzten Doppelkupplungsgetriebezweig DKG1 bzw. DKG2 etwa zeitgleich mit der Hauptgetriebeschaltung ausgelöst, weil eine Prädiktion im Doppelkupplungsgetriebe nicht möglich war. Der Schaltvorgang dauert länger als der Lastabbau. Der Beginn der Drehzahlanpassung kann erst mit einer Verzögerung $\Delta t\_W$ in einer Phase P4 initiiert werden. Während der Verzögerung $\Delta t\_W$ senkt sich die Motor-Istdrehzahl n_Eng_act_2 bereits passiv, aufgrund der inneren Motorverluste und/oder durch eine gegebenenfalls vorhandene Getriebebremse, welche weniger effektiv ist als die Getriebebremsfunktion der Doppelkupplung, vergleichsweise geringfügig um einen Betrag $\Delta n\_Eng$ ab. Entsprechend verlängert sich die Synchronisationszeit um einen Zeitraum $\Delta t\_S$, der etwas kleiner ist als die Wartezeit $\Delta t\_W$. Der Zielgang g_act_2 = g_tgt kann erst zu einem späteren Zeitpunkt t_2-2 (P5_2) eingelegt werden.

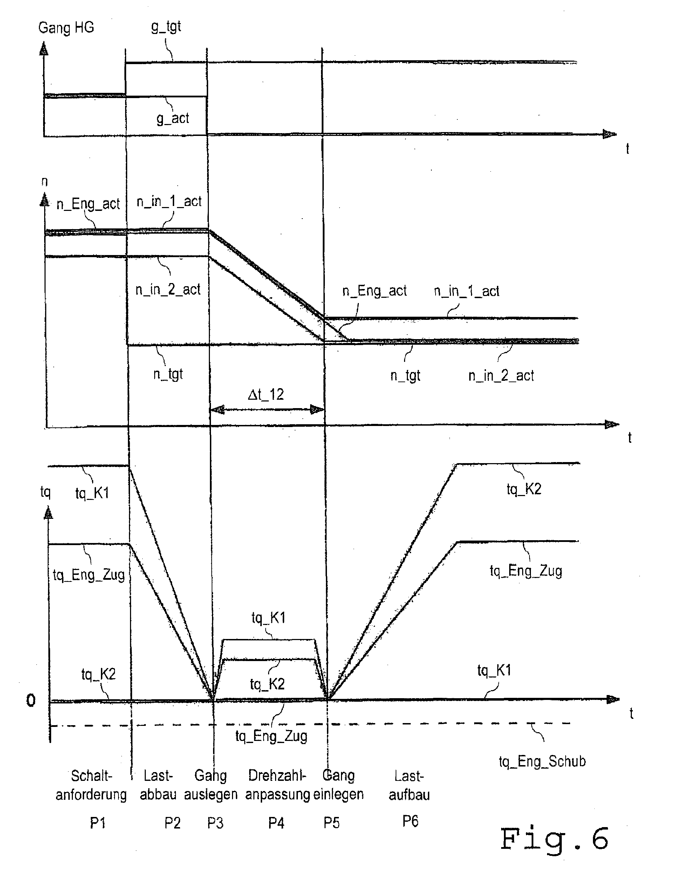

Fig. 6 zeigt einen normalen Schaltablauf, d.h. einen Schaltablauf, bei dem der Antriebsmotor M und ein Getriebeeingang nicht durchgehend gekoppelt sind. Der Schaltablauf ist in sechs Phasen P1 bis P6 unterteilt. Als sechste Phase P6 ist der Lastaufbau nach der Schaltung dargestellt. Eingezeichnet sind die Gangkurven für den Zielgang g_tgt und den aktuellen Gang g_act, die Drehzahlverläufe der aktuellen Getriebeeingangsdrehzahl n_in_1_act der einen Kupplung K1 und n_in_2_act der anderen Kupplung K2 im Vergleich zur Ziel- bzw. Synchrondrehzahl n_tgt und die aktuelle Drehzahl n_Eng_act des Antriebsmotors M, sowie die Momentenverläufe tq_K1, tq_K2 der Kupplungen K1, K2 und das Motormoment tq_Eng_Zug, tq_Eng_Schub bei einer Schaltung im Zugbetrieb bzw. im Schubbetrieb.

Zu Beginn der Drehzahlanpassung (P4) sind beide Kupplungen K1, K2 momentfrei bzw. geöffnet. Während der Drehzahlanpassung in einem Zeitraum ∆t_12 befindet sich die erste Kupplung K1 im Haften. Die Drehzahlkurve des Antriebsmotors n_Eng_act und die Drehzahlkurven n_in_1_act der ersten Kupplung K1 überdecken sich folglich in diesem Bereich, da deren Drehzahlen gleich sind. Die zweite Kupplung k2 befindet sich hingen im Schlupf, bei kleineren Drehzahlen n_in_2_act. Der Antriebsmotor M und der Getriebeeingang werden folglich abgebremst.

Über die Schaltung wechselt die lastführende Kupplung von K1 nach K2, wobei der Wechsel mit dem Gangeinlegen (P5) und dem Beginn des Lastaufbaus (P6) vollzogen ist. Daher werden zum Ende der Drehzahlanpassung beide Kupplungen K1, K2 wieder geöffnet. Die zuvor haftende Kupplung K1 bleibt geöffnet, die zuvor schlupfende Kupplung K2 wird nun in Schließrichtung angesteuert. Dies wird an den beiden Drehmomentkurven tq_K1, tq_K2 deutlich, die jeweils das übertragbare Moment an der Kupplung K1, K2 zeigen.

Der Synchronlauf zum Gangeinschalten (P5) ist erreicht, wenn die Drehzahl n_in_2_act derjenigen Kupplung, welche nach der Schaltung lastführend ist, also in diesem Fall die zweite Kupplung K2, die Zieldrehzahl n_tgt erreicht hat (siehe Drehzahldiagramm der Fig. 6). Der Verlauf des Motor- bzw. Antriebsmomentes tq_Eng_Zug sinkt bei einer Zugschaltung beim Auslegen des Ursprungsganges auf den Wert Null (Lastfreiheit) und wird nach der Drehzahlanpassung wieder aufgebaut. Bei einer Schubschaltung liegt ein konstantes (negatives) Schubmoment tq_Eng_Schub an.

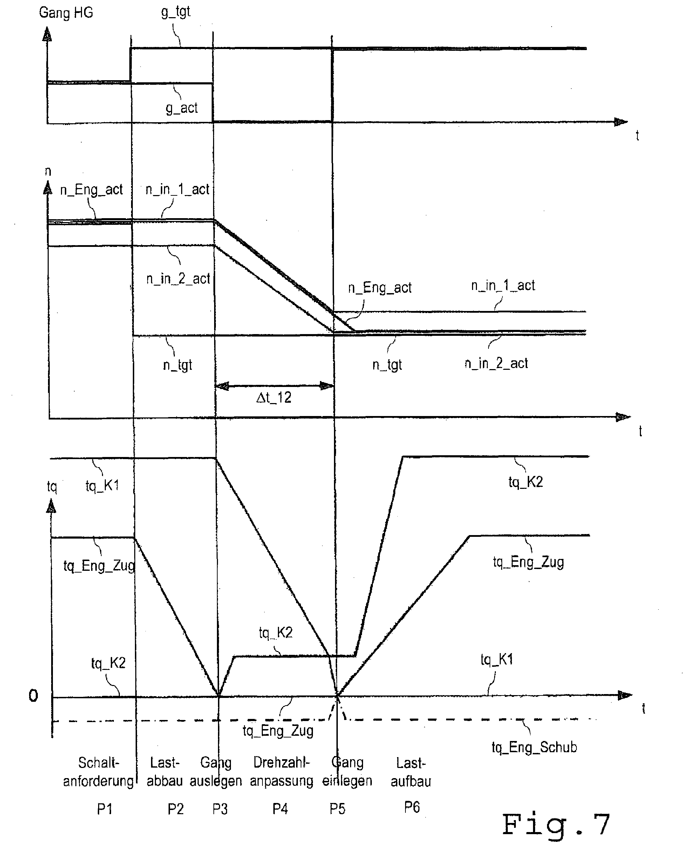

Fig. 7 zeigt einen Schaltverlauf, bei dem in jeder Phase P1 bis P6 zumindest eine Kupplung K1, K2 geschlossen oder teilgeschlossen ist. Die Gang- und Drehzahlverläufe entsprechen denen der normalen Schaltung (Fig. 6). Die lastführende Kupplung wechselt wiederum von K1 nach K2. Zu Beginn der Drehzahlanpassung ist die aktuell lastführende Kupplung K1 während des Lastabbaus noch geschlossen, während das Motormoment kontinuierlich bis zur Lastfreiheit abgesenkt wird. Bei Auslegen des Ursprungsganges ist somit eine Kupplung K1 geschlossen und die andere Kupplung K2 geöffnet.

Während der Drehzahlanpassung wird die geschlossene Kupplung K1 allmählich geöffnet, während die andere Kupplung K2 im Schlupfbetrieb ist. Wenn sich beide Kupplungsmomente tq_K1, tq_K2 im Schlupf treffen, wird der Öffnungsvorgang der ersten Kupplung K1 beschleunigt. Der Zielgang kann wiederum eingeschaltet werden (P5), wenn die Drehzahl n_in_2_act der zweiten Kupplung K2, welche nach der Schaltung lastführend ist, die Zieldrehzahl n_tgt erreicht hat.

Die schlupfende Kupplung K2 wird zum Ende der Drehzahlanpassung nicht vollständig geöffnet und mit einer geringen Verzögerung nach dem Gangeinlegen weiter in Schließrichtung angesteuert. Die erste Kupplung K1 ist zum Zeitpunkt des Gangeinlegens bereits vollständig geöffnet. Bei einer Schubschaltung würde das negative Schubmoment am Antriebsmotor daher zum Einlegen des Ganges kurzfristig verschwinden.

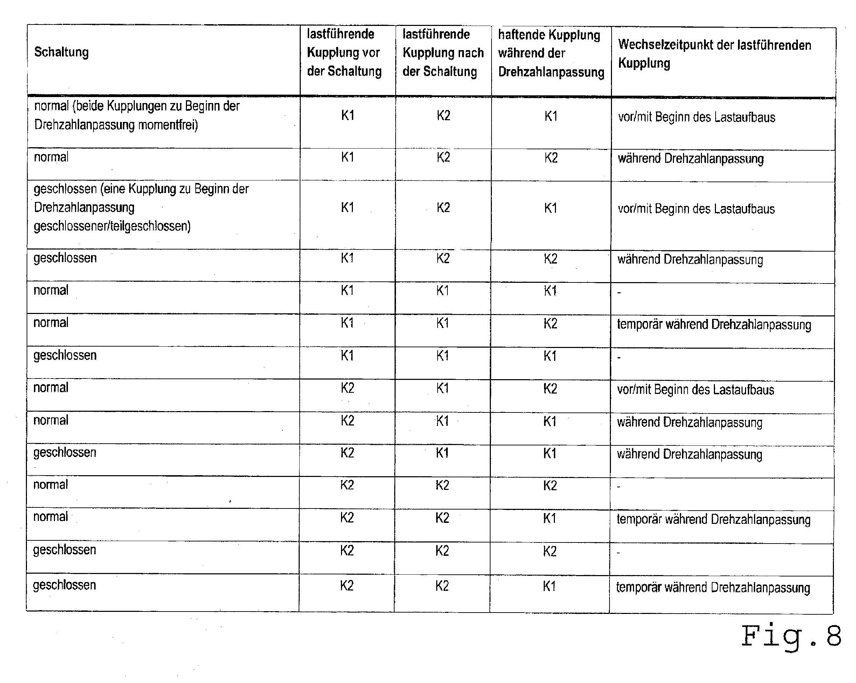

Die in Fig. 6 und Fig. 7 beschrieben Diagramme sind als beispielhafte Schaltabläufe zu verstehen. Weitere, hier nicht durch Diagramme dargestellte, Schaltabläufe sind möglich. Daher sind abschließend alle sinnvollen Varianten in Übersichtsform wie folgt zusammengefasst aufgeführt und in Fig. 8 in tabellarischer Form dargestellt:

(1) Fig. 6: Normaler Schaltablauf. Wechsel der lastführenden Kupplung von K1 nach K2 über die Schaltung. K1 ist während der Drehzahlanpassung im Haften, also synchron zur Motordrehzahl. Wechsel der lastführenden Kupplung vor/mit Beginn des Lastaufbaus.

(2) Normaler Schaltablauf. Wechsel der lastführenden Kupplung von K1 nach K2 über die Schaltung. K2 ist während der Drehzahlanpassung im Haften, also synchron zur Motordrehzahl. Wechsel der lastführenden Kupplung während der Drehzahlangleichung.

(3) Fig. 7: Schaltablauf mit geschlossener oder teilgeschlossener Kupplung. Wechsel der lastführenden Kupplung von K1 nach K2 über die Schaltung. K1 ist während der Drehzahlanpassung im Haften, also synchron zur Motordrehzahl. Wechsel der lastführenden Kupplung vor/mit Beginn des Lastaufbaus.

(4) Schaltablauf mit geschlossener oder teilgeschlossener Kupplung. Wechsel der lastführenden Kupplung von K1 nach K2 über die Schaltung. K2 ist während der Drehzahlanpassung im Haften, also synchron zur Motordrehzahl. Wechsel der lastführenden Kupplung während der Drehzahlangleichung.

(5) Normaler Schaltablauf. Kein Wechsel der lastführenden Kupplung K1 über die Schaltung: K1 ist während der Drehzahlanpassung im Haften, also synchron zur Motordrehzahl.

(6) Normaler Schaltablauf. Kein Wechsel der lastführenden Kupplung K1 über die Schaltung. K2 ist während der Drehzahlanpassung im Haften, also synchron zur Motordrehzahl. Temporärer Wechsel der lastführenden Kupplung während der Drehzahlanpassung.

(7) Schaltablauf mit geschlossener oder teilgeschlossener Kupplung. Kein Wechsel der lastführenden Kupplung K1 über die Schaltung. K1 ist während der Drehzahlanpassung im Haften, also synchron zur Motordrehzahl.

(8) Normaler Schaltablauf. Wechsel der lastführenden Kupplung von K2 nach K1 über die Schaltung. K2 ist während der Drehzahlanpassung im Haften, also synchron zur Motordrehzahl. Wechsel der lastführenden Kupplung vor/mit Beginn der Drehzahlangleichung.

(9) Normaler Schaltablauf. Wechsel der lastführenden Kupplung von K2 nach K1 über die Schaltung. K1 ist während der Drehzahlanpassung im Haften, also synchron zur Motordrehzahl. Wechsel der lastführenden Kupplung während der Drehzahlangleichung.

(10) Schaltablauf mit geschlossener oder teilgeschlossener Kupplung. Wechsel der lastführenden Kupplung von K2 nach K1 über die Schaltung. K1 ist während der Drehzahlanpassung im Haften, also synchron zur Motordrehzahl. Wechsel der lastführenden Kupplung während der Drehzahlangleichung.

(11) Normaler Schaltablauf. Kein Wechsel der lastführenden Kupplung K2 über die Schaltung: K2 ist während der Drehzahlanpassung im Haften, also synchron zur Motordrehzahl.

(12) Normaler Schaltablauf. Kein Wechsel der lastführenden Kupplung K2 über die Schaltung. K1 ist während der Drehzahlanpassung im Haften, also synchron zur Motordrehzahl. Temporärer Wechsel der lastführenden Kupplung während der Drehzahlanpassung.

(13) Schaltablauf mit geschlossener oder teilgeschlossener Kupplung. Kein Wechsel der lastführenden Kupplung K2 über die Schaltung. K2 ist während der Drehzahlanpassung im Haften, also synchron zur Motordrehzahl.

(14) Schaltablauf mit geschlossener oder teilgeschlossener Kupplung. Kein Wechsel der lastführenden Kupplung K2 über die Schaltung. K1 ist während der Drehzahlanpassung im Haften, also synchron zur Motordrehzahl. Temporärer Wechsel der lastführenden Kupplung während der Drehzahlanpassung.

Bezugszeichenliste

| | |
|---|---|
| AB | Abtriebswelle |
| AW | Antriebswelle |
| DK | Doppelkupplung |
| DKG | Doppelkupplungsgetriebe |
| DKG1 | Doppelkupplungsgetriebezweig |
| DKG2 | Doppelkupplungsgetriebezweig |
| F1 - F19 | Funktionsblock |
| g_tgt_ | Zielgang |
| g_act_1 | Aktueller Gang |
| g_act_2 | Aktueller Gang |
| gDK_tgt | Zielgang im Doppelkupplungsgetriebe |
| gDK_act_1 | Aktueller Gang im Doppelkupplungsgetriebe |
| gDK_act_2 | Aktueller Gang im Doppelkupplungsgetriebe |
| GE1 | Getriebeeingangswelle |
| GE2 | Getriebeeingangswelle |
| HG | Hauptgetriebe |
| i_1 | Eingangsübersetzung Doppelkupplungsgetriebe |
| i_2 | Eingangsübersetzung Doppelkupplungsgetriebe |
| i_HG1 | Hauptgetriebegang |
| i_HG2 | Hauptgetriebegang |
| K1 | Kupplung |

| | |
|---|---|
| K2 | Kupplung |
| M | Antriebsmotor |
| n_ab | Abtriebsdrehzahl am Doppelkupplungsgetriebe |
| n_ab_HG | Abtriebsdrehzahl am Hauptgetriebe |
| n_Eng_act_1 | aktuelle Motordrehzahl |
| n_Eng_act_2 | aktuelle Motordrehzahl |
| n_in_1_act | Getriebeeingangsdrehzahl Kupplung K1 |
| n_in_2_act | Getriebeeingangsdrehzahl Kupplung K2 |
| n_K1 | Kupplungsausgangsdrehzahl |
| n_K2 | Kupplungsausgangsdrehzahl |
| n_M | Motordrehzahl |
| n_tgt | Zieldrehzahl Motor, Getriebeeingang |
| P1 - P6 | Schaltablaufphasen |
| S | Schaltkupplung, Klauenkupplung |
| t | Zeit |
| t_0 | Zeitpunkt |
| t_1 | Zeitpunkt |
| t_2-1 | Zeitpunkt |
| t_2-2 | Zeitpunkt |
| tq_Eng_Schub | Motormoment bei Schubschaltung |
| tq_Eng_Zug | Motormoment bei Zugschaltung |
| tq_K1 | Übertragbares Kupplungsmoment an K1 |
| tq_K2 | Übertragbares Kupplungsmoment an K2 |
| tq_M | Motormoment |
| VW1 | Vorgelegewelle |
| z11 | Zahnrad |
| z12 | Zahnrad |
| z21 | Zahnrad |
| z22 | Zahnrad |
| z31 | Zahnrad |
| z32 | Zahnrad |
| z41 | Zahnrad |
| z42 | Zahnrad |
| Δt_12 | Drehzahlanpassungszeit |
| Δt_W | Verzögerungszeit |
| Δt_S | Drehzahlanpassungsverzögerung |

**Patentansprüche**

1. Verfahren zur Steuerung von Schaltungen eines Fahrzeuggetriebes, beispielsweise eines Nutzfahrzeuges, mit einem als ein zugkraftunterbrechungsfrei schaltendes Doppelkupplungsgetriebe (DKG) ausgebildeten Getriebe oder Teilgetriebe, welchem eine Doppelkupplung (DK) mit einer ersten Kupplung (K1) und einer zweiten Kupplung (K2), die mit einem Antriebsmotor (M) wirkverbindbar sind, zugeordnet ist, und mit einem dem Doppelkupplungsgetriebe (DKG) in einem Antriebsstrang nachgelagerten, als ein zugkraftunterbrechend schaltendes Hauptgetriebe (HG) ausgebildeten Getriebe oder Teilgetriebe, **dadurch gekennzeichnet, dass** die Doppelkupplung (DK) durch Verspannen der beiden Kupplungen (K1, K2) bei Schaltungen des dem Doppelkupplungsgetriebe (DKG) nachgelagerten Hauptgetriebes (HG) als eine Getriebebremse und/oder eine Motorbremse für eine Drehzahlanpassung zu schaltender Komponenten angesteuert wird.

2. Verfahren nach Anspruch 1, **dadurch gekennzeichnet, dass** zwischen einem ersten Schaltablauf, bei dem zu Beginn der Drehzahlanpassung beide Kupplungen (K1, K2) zumindest weitgehend drehmomentfrei sind, und einem zweiten Schaltablauf, bei dem zu Beginn der Drehzahlanpassung eine der beiden Kupplungen (K1, K2) drehmomentfrei ist und die andere der beiden Kupplungen (K1, K2) ein Drehmoment im Haften überträgt, unterschieden wird.

3. Verfahren nach Anspruch 1 oder 2, **dadurch gekennzeichnet, dass** bei der Drehzahlanpassung eine der beiden Kupplungen (K1, K2) im Haften und die andere der beiden Kupplungen im Schlupf betrieben wird.

**4.** Verfahren nach einem der Ansprüche 1 bis 3, **dadurch gekennzeichnet, dass** die Kupplung (K1, K2), welche im Haften betrieben werden soll, unter Berücksichtigung relevanter Übersetzungsverhältnisse mindestens soweit geschlossen wird oder bleibt, dass sie ein bestimmtes Verspannungsmoment übertragen kann, ohne zu schlupfen.

**5.** Verfahren nach einem der Ansprüche 1 bis 4, **dadurch gekennzeichnet, dass** die Kupplung (K1, K2), welche im Schlupf betrieben werden soll, unter Berücksichtigung relevanter Übersetzungsverhältnisse nur soweit geschlossen wird, dass ein bestimmtes Verspannungsmoment an der haftenden Kupplung (K1, K2) noch übertragen werden kann, ohne dass diese schlupft.

**6.** Verfahren nach einem der Ansprüche 1 bis 5, **dadurch gekennzeichnet, dass**, sofern mindestens ein Doppelkupplungsgetriebezweig (DKG1, DKG2) des Doppelkupplungsgetriebes (DKG) mehr als ein Gang besitzt, zur Durchführung einer Schaltung im Hauptgetriebe (HG) jeweils die schneller und die langsamer laufende der beiden Kupplungen (K1, K2) ermittelt wird, und dass andernfalls die schneller und die langsamer laufende der beiden Kupplungen (K1, K2) vorab in einer Steuerung abgespeichert werden.

**7.** Verfahren nach einem der Ansprüche 1 bis 6, **dadurch gekennzeichnet, dass** die Schaltungen wenigstens nach folgenden Kriterien kategorisiert werden:

a) Gangwechsel im Doppelkupplungsgetriebe (DKG) und im Hauptgetriebe (HG) mit Wechsel der lastführenden Kupplung (K1, K2) oder alleiniger Gangwechsel im Hauptgetriebe (HG),
b) Wechselrichtung der Kupplungen (K1, K2) von der schnelleren auf die langsamere Kupplung (K1, K2) oder umgekehrt,
c) Schließgrade der ersten Kupplung (K1) und der zweiten Kupplung (K2).

**8.** Verfahren nach einem der Ansprüche 1 bis 7, **dadurch gekennzeichnet, dass** die Ansteuerung der Doppelkupplung (DK) in Abhängigkeit von Zielkriterien, wie Performance, Komfort und Verschleiß und/oder weiterer Kriterien erfolgt.

**9.** Verfahren nach einem der Ansprüche 1 bis 8, **dadurch gekennzeichnet, dass** für performanceorientierte Schaltungen die Kupplung (K1, K2), welche im Schlupf betrieben soll und die Kupplung (K1, K2), welche im Haften betrieben werden soll, derart gewählt werden, dass sich eine möglichst kurze Zeit für die Drehzahlanpassung ergibt.

**10.** Verfahren nach einem der Ansprüche 1 bis 9, **dadurch gekennzeichnet, dass** für performanceorientierte Schaltungen, bei denen dieselbe Kupplung (K1, K2) eines Doppelkupplungsgetriebezweiges (DKG1, DKG2) vor und nach der Schaltung lastführend ist, in dem anderen, aktuell ungenutzten Doppelkupplungsgetriebezweig (DKG1, DKG2), sofern dieser Getriebezweig mehr als ein Gang besitzt, ein Gang derart gewählt wird, dass sich eine möglichst kurze Zeit für die Drehzahlanpassung ergibt.

**11.** Verfahren nach einem der Ansprüche 1 bis 10, **dadurch gekennzeichnet, dass** für die Wahl der schlupfenden und der haftenden Kupplung (K1, K2) sowie gegebenenfalls des Ganges in einem mehrgängigen, aktuell ungenutzten Doppelkupplungsgetriebezweig (DKG1, DKG2), eine Zeitabschätzung für die Drehzahlanpassung anhand eines oder mehrerer folgender vorgegebener, gemessener oder über Algorithmen berechneter Parameter oder daraus abgeleiteter Größen durchgeführt wird:

a) relevante Übersetzungsverhältnisse im Doppelkupplungsgetriebe (DKG),
b) Drehzahlabfall durch Gangwechsel im Doppelkupplungsgetriebe (DKG),
c) Drehzahländerung am Abtrieb des Doppelkupplungsgetriebes (DKG),
d) maximal übertragbare Momente der beiden Kupplungen (K1, K2),
e) effektiv wirksames Massenträgheitsmoment,
f) abzubauende Motordrehzahldifferenz am Antriebsmotor (M),
g) erzeugbares Bremsmoment am Antriebsmotor (M).

**12.** Verfahren nach einem der Ansprüche 1 bis 11, **dadurch gekennzeichnet, dass** bei der Bestimmung der effektiven Massenträgheit vorhandene ankoppelbare und abkoppelbare Nebenabtriebskomponenten entsprechend ihrem Betriebszustand berücksichtigt werden.

**13.** Verfahren nach einem der Ansprüche 1 bis 12, **dadurch gekennzeichnet, dass** bei der Bestimmung der durch die Drehzahlanpassung bis zum Einlegen eines Zielganges abzubauenden Motordrehzahldifferenz eine prognostizierte Änderung der Fahrzeuggeschwindigkeit berücksichtigt wird.

**14.** Verfahren nach einem der Ansprüche 1 bis 13, **dadurch gekennzeichnet, dass** bei der Bestimmung der Motordrehzahldifferenz eine Drehzahländerung des Antriebsmotors (M) während einer Zeitverzögerung durch einen Gangwechsel im aktuell ungenutzten Doppelkupplungsgetriebezweig (DKG1, DKG2) berücksichtigt wird, und dass in der Folge die Zeitverzögerung bei der Bestimmung der Zeitdauer für die Drehzahlanpassung berücksichtigt wird.

**15.** Verfahren nach einem der Ansprüche 1 bis 14, **dadurch gekennzeichnet, dass** bei der Bestimmung des Motorbremsmomentes ein mittleres Kupplungsmoment der schlupfenden Kupplung (K1, K2) angenommen wird.

**16.** Verfahren nach Anspruch 15, **dadurch gekennzeichnet, dass** das angenommene mittlere Kupplungsmoment umso näher an einem Endwert liegt, je größer die zu überwindende Drehzahldifferenz für die Drehzahlanpassung ist.

**17.** Verfahren nach einem der Ansprüche 1 bis 16, **dadurch gekennzeichnet, dass** ein Gangwechsel im aktuell ungenutzten Doppelkupplungsgetriebezweig (DKG1, DKG2) prädiktiv durchgeführt wird, wenn die lastführende Kupplung (K1, K2) durch die zu erwartende folgende Schaltung unverändert bleibt.

**18.** Verfahren nach einem der Ansprüche 1 bis 17, **dadurch gekennzeichnet, dass** die Ansteuerung der Doppelkupplung (DK) als eine Getriebebremse und/oder eine Motorbremse dann erfolgt, wenn eine Zieldrehzahl der Drehzahlanpassung größer oder gleich einer Leerlaufdrehzahl des Antriebsmotors ist.

**19.** Verfahren nach einem der Ansprüche 1 bis 18, **dadurch gekennzeichnet, dass** die Ansteuerung der Doppelkupplung (DK) als eine Getriebebremse und/oder eine Motorbremse auch erfolgt, wenn bei einem Unterschreiten der Leelaufdrehzahl durch einen Eingriff in eine Motorsteuerung eine Leerlaufregelung temporär unterdrückt wird.

**20.** Verfahren nach einem der Ansprüche 1 bis 19, **dadurch gekennzeichnet, dass** die Ansteuerung der Doppelkupplung (DK) als eine Getriebebremse und/oder eine Motorbremse auch erfolgt, wenn die bremswirksame Ansteuerung der Doppelkupplung bei Erreichen oder höchstens geringfügigem Unterschreiten der Leerlaufdrehzahl beendet wird.

**Claims**

**1.** Method for controlling shifting operations of a vehicle transmission, for example of a utility vehicle, having a transmission or partial transmission which is embodied as a double clutch transmission (DKG) which shifts in a traction-free fashion, which transmission or partial transmission is assigned a double clutch (DK) with a first clutch (K1), and a second clutch (K2) which can be operatively connected to a drive engine (M), and having a transmission or partial transmission which is arranged downstream of the double clutch transmission (DKG) in a drive train and is embodied as a main transmission (HG) which shifts in a tractive-force-interrupting fashion, **characterized in that** the double clutch (DK) is actuated by tensioning the two clutches (K1, K2) in the case of shifting operations of the main transmission (HG), arranged downstream of the double clutch transmission (DKG), as a transmission brake and/or an engine brake for adapting the rotational speed of components which are to be shifted.

**2.** Method according to Claim 1, **characterized in that** a differentiation is made between a first shifting sequence, during which both clutches (K1, K2) are at least largely free of torque at the start of the adaptation of the rotational speed, and a second shifting sequence, during which one of the two clutches (K1, K2) is free of torque at the start of the adaptation of the rotational speed, and the other of the two clutches (K1, K2) transmits a torque in a state of adhesion.

**3.** Method according to Claim 1 or 2, **characterized in that** during the adaptation of the rotational speed one of the two clutches (K1, K2) is operated in a state of adhesion, and the other of the two clutches is operated in a slipping state.

**4.** Method according to one of Claims 1 to 3, **characterized in that** the clutch (K1, K2), which is to be operated in a state of adhesion, is or remains closed, while taking into account relevant transmission ratios, at least to such an extent that it can transmit a specific stress torque, without slipping.

**5.** Method according to one of Claims 1 to 4, **characterized in that** the clutch (K1, K2), which is to be operated in a slipping state is closed, while taking into account relevant transmission ratios, only to such an extent that a specific stress torque at the adhering clutch (K1, K2) can still be transmitted without said clutch slipping.

**6.** Method according to one of Claims 1 to 5, **characterized in that** if at least one double clutch transmission branch (DKG1, DKG2) of the double clutch transmission (DKG) has more than one gearspeed, in each case the faster and the slower running of the two clutches (K1, K2) is determined to carry out a shifting operation in the main transmission (HG), and **in that** otherwise the faster and the slower running of the two clutches (K1, K2) are stored in advance in a controller.

**7.** Method according to one of Claims 1 to 6, **characterized in that** the shifting operations are categorized at least according to the following criteria:

a) gearspeed change in the double clutch transmission (DKG) and in the main transmission (HG) with changing of the load-conducting clutch (K1, K2) or gearspeed change only in the main transmission (HG),
b) change of direction of the clutches (K1, K2) from the faster to the slower clutch (K1, K2) or vice versa, and
c) degrees of closing of the first clutch (K1, K2) and of the second clutch (K2).

**8.** Method according to one of Claims 1 to 7, **characterized in that** the double clutch (DK) is actuated as a function of target criteria such as performance, comfort and wear and/or further criteria.

**9.** Method according to one of Claims 1 to 8, **characterized in that** for performance-oriented shifting operations the clutch (K1, K2) which is to be operated in a slipping state, the clutch (K1, K2) which is to be operated in a state of adhesion, are selected in such a way that a shortest possible time is produced for the adaptation of the rotational speed.

**10.** Method according to one of Claims 1 to 9, **characterized in that** for performance-oriented shifting operations in which the same clutch (K1, K2) of a double clutch transmission branch (DKG1, DKG2) is load-conducting before and after the shifting operation, a gear speed is selected in the other, currently unused double clutch transmission branch (DKG1, DKG2), if this transmission branch has more than one gearspeed, in such a way that a shortest possible time is produced for the adaptation of the rotational speed.

**11.** Method according to one of Claims 1 to 10, **characterized in that**, for the selection of the slipping and of the adhering clutch (K1, K2) as well as, if appropriate, of the gearspeed in a multi-gearspeed, currently unused double clutch transmission branch (DKG1, DKG2), a time estimate for the adaptation of the rotational speed is carried out on the basis of one or more of the following parameters which are predefined, measured or calculated by means of algorithms, or variables which are derived therefrom:

a) relevant transmission ratios in the double clutch transmission (DKG),
b) drop in the rotational speed as a result of a gearspeed change in the double clutch transmission (DKG),
c) change in rotational speed at the output of the double clutch transmission (DKG),
d) maximum transmissible torques of the two clutches (K1, K2),
e) effectively active moment of mass inertia,
f) difference in engine rotational speed at the drive engine (M) which is to be eliminated, and
g) braking torque which can be generated at the drive engine (M).

**12.** Method according to one of Claims 1 to 11, **characterized in that** during the determination of the effective mass inertia secondary output components which are present and which can be coupled and decoupled are taken into account in accordance with their operating state.

**13.** Method according to one of Claims 1 to 12, **characterized in that** a predicted change in the vehicle speed is taken into account during the determination of difference in the engine rotational speed which is to be eliminated by means of the adaptation of the rotational speed up to the engagement of a target gearspeed.

**14.** Method according to one of Claims 1 to 13, **characterized in that** a change in the rotational speed of the drive engine (M) during a delay as a result of a gearspeed change in the currently unused double clutch transmission branch (DKG1, DKG2) is taken into account during the determination of the difference in the engine rotational speed, and **in that** as a result the delay is taken into account during the determination of the time period for the adaptation of the rotational speed.

**15.** Method according to one of Claim 1 to 14, **characterized in that** an average clutch torque of the slipping clutch (K1, K2) is assumed during the determination of the engine braking torque.

**16.** Method according to Claim 15, **characterized in that** the assumed average clutch torque is closer to an end value the larger the difference in rotational speed to be overcome for the adaption of the rotational speed.

**17.** Method according to one of Claim 1 to 16, **characterized in that** a gearspeed change in the currently unused double clutch transmission branch (DKG1, DKG2) is carried out predictively if the load-conducting clutch (K1, K2) remains unchanged as a result of the expected, following shifting operation.

**18.** Method according to one of Claim 1 to 17, **characterized in that** the actuation of the double clutch (DK) takes place as a transmission brake and/or an engine brake if a target rotational speed of the adaptation of the rotational speed is higher than or equal to an idling rotational speed of the drive motor.

**19.** Method according to one of Claim 1 to 18, **characterized in that** the double clutch (DK) is actuated as a transmission brake and/or engine brake even if an idling control is temporarily suppressed when the idling rotational speed is undershot by an intervention in an engine controller.

**20.** Method according to one of Claim 1 to 19, **characterized in that** the double clutch (DK) is actuated as a transmission brake and/or an engine brake even if the actuation of the double clutch with the effective braking is ended when the idling rotational speed is reached or at most slightly undershot.

## Revendications

**1.** Procédé de commande de changement de vitesses d'une transmission de véhicule, par exemple d'un véhicule utilitaire, comprenant une transmission ou une transmission partielle réalisée en tant que transmission à double embrayage (DKG) commutant sans interruption de la force de traction, à laquelle est associé un double embrayage (DK) avec un premier embrayage (K1) et un deuxième embrayage (K2) qui peuvent être connectés fonctionnellement à un moteur d'entraînement (M), et comprenant une transmission ou une transmission partielle placée en aval de la transmission à double embrayage (DKG) dans une chaîne cinématique, réalisée en tant que transmission principale (HG) commutant avec interruption de la force de traction, **caractérisé en ce que** le double embrayage (DK) est commandé par serrage des deux embrayages (K1, K2) dans le cas de commutations de la transmission principale (HG) placée en aval de la transmission à double embrayage (DKG) en tant que frein de transmission et/ou frein moteur pour une adaptation de la vitesse de rotation à des composants à commuter.

**2.** Procédé selon la revendication 1, **caractérisé en ce que** l'on fait une distinction entre une première opération de commutation dans laquelle au début de l'adaptation de la vitesse de rotation, les deux embrayages (K1, K2) sont au moins essentiellement sans couple, et une deuxième opération de commutation dans laquelle au début de l'adaptation de la vitesse de rotation, l'un des deux embrayages (K1, K2) est sans couple et l'autre des deux embrayages (K1, K2) transmet un couple par adhérence.

**3.** Procédé selon la revendication 1 ou 2, **caractérisé en ce que** lors de l'adaptation de la vitesse de rotation, l'un des deux embrayages (K1, K2) fonctionne par adhérence et l'autre des deux embrayages fonctionne en patinage.

**4.** Procédé selon l'une quelconque des revendications 1 à 3, **caractérisé en ce que** l'embrayage (K1, K2) qui doit fonctionner par adhérence est fermé ou reste fermé en tenant compte de conditions de démultiplication pertinentes au moins jusqu'à ce qu'il puisse transmettre un couple de serrage déterminé sans patiner.

**5.** Procédé selon l'une quelconque des revendications 1 à 4, **caractérisé en ce que** l'embrayage (K1, K2) qui doit fonctionner en patinage est fermé en tenant compte de conditions de démultiplication pertinentes seulement dans une mesure telle qu'un couple de serrage déterminé puisse encore être transmis à l'embrayage qui adhère (K1, K2) sans que celui-ci ne patine.

**6.** Procédé selon l'une quelconque des revendications 1 à 5, **caractérisé en ce que** dans la mesure où au moins une branche de transmission à double embrayage (DKG1, DKG2) de la transmission à double embrayage (DKG) possède plus d'un rapport, pour mettre en oeuvre une commutation dans la transmission principale (HG), on détermine à chaque fois l'embrayage tournant le plus rapidement et l'embrayage tournant le plus lentement des deux embrayages (K1, K2), et **en ce qu'**autrement l'embrayage tournant le plus rapidement et l'embrayage tournant le plus lentement des deux embrayages (K1, K2) sont mémorisés préalablement dans une commande.

7. Procédé selon l'une quelconque des revendications 1 à 6, **caractérisé en ce que** les commutations sont catégorisées au moins suivant les critères suivants :

   a) changement de rapport dans la transmission à double embrayage (DKG) et dans la transmission principale (HG) avec changement de l'embrayage conduisant la charge (K1, K2) ou simple changement de rapport dans la transmission principale (HG),
   b) sens de changement des embrayages (K1, K2) de l'embrayage le plus rapide au plus lent (K1, K2) ou inversement,
   c) degrés de fermeture du premier embrayage (K1) et du deuxième embrayage (K2).

8. Procédé selon l'une quelconque des revendications 1 à 7, **caractérisé en ce que** la commande du double embrayage (DK) s'effectue en fonction de critères cibles, tels que la performance, le confort et l'usure et/ou d'autres critères.

9. Procédé selon l'une quelconque des revendications 1 à 8, **caractérisé en ce que** pour des commutations visant la performance, l'embrayage (K1, K2) qui doit fonctionner en patinage et l'embrayage (K1, K2) qui doit fonctionner par adhérence sont sélectionnés de telle sorte que l'adaptation de la vitesse de rotation s'effectue en un temps aussi court que possible.

10. Procédé selon l'une quelconque des revendications 1 à 9, **caractérisé en ce que** pour des commutations visant la performance, dans lesquelles le même embrayage (K1, K2) d'une branche de la transmission à double embrayage (DKG1, DKG2) doit conduire la charge avant et après la commutation, dans l'autre branche de la transmission à double embrayage (DKG1, DKG2) actuellement non utilisée, dans la mesure où cette branche de la transmission possède plus d'un rapport, un rapport est sélectionné de telle sorte que l'adaptation de la vitesse de rotation s'effectue en un temps aussi court que possible.

11. Procédé selon l'une quelconque des revendications 1 à 10, **caractérisé en ce que** pour la sélection de l'embrayage qui patine et de l'embrayage qui adhère (K1, K2) et éventuellement du rapport dans une branche de la transmission à double embrayage (DKG1, DKG2) à plusieurs rapports, actuellement non utilisée, on effectue une estimation du temps de l'adaptation de la vitesse de rotation à l'aide d'un ou de plusieurs des paramètres suivants prédéterminés, mesurés ou calculés à l'aide d'algorithmes ou de grandeurs dérivées de ceux-ci

   a) rapports de démultiplication pertinents dans la transmission à double embrayage (DKG),
   b) chute de la vitesse de rotation par changement de rapport dans la transmission à double embrayage (DKG),
   c) variation de la vitesse de rotation au niveau de la prise de force de la transmission à double embrayage (DKG),
   d) couples maximums transmissibles des deux embrayages (K1, K2),
   e) couple d'inertie de masse effectivement actif,
   f) différence de vitesse de rotation du moteur à réduire au niveau du moteur d'entraînement (M),
   g) couple de freinage pouvant être généré au niveau du moteur d'entraînement (M).

12. Procédé selon l'une quelconque des revendications 1 à 11, **caractérisé en ce que** lors de la détermination de l'inertie de masse effective, des composants de prise de force auxiliaires existants pouvant être accouplés et désaccouplés sont pris en compte en fonction de leur état de fonctionnement.

13. Procédé selon l'une quelconque des revendications 1 à 12, **caractérisé en ce que** lors de la détermination de la différence de vitesse de rotation du moteur à réduire par l'adaptation de la vitesse de rotation jusqu'à l'enclenchement d'un rapport cible, une variation prévue de la vitesse du véhicule est prise en compte.

14. Procédé selon l'une quelconque des revendications 1 à 13, **caractérisé en ce que** lors de la détermination de la différence de vitesse de rotation du moteur, une variation de la vitesse de rotation du moteur d'entraînement (M) pendant un temps de retard par un changement de rapport dans la branche de la transmission à double embrayage (DKG1, DKG2) actuellement non utilisée est prise en compte, et **en ce que** le temps de retard est ensuite pris en compte lors de la détermination de la durée pour l'adaptation de la vitesse de rotation.

15. Procédé selon l'une quelconque des revendications 1 à 14, **caractérisé en ce que** lors de la détermination du couple de frein moteur, un couple d'embrayage moyen de l'embrayage qui patine (K1, K2) est supposé.

16. Procédé selon la revendication 15, **caractérisé en ce que** le couple d'embrayage moyen supposé est d'autant plus proche d'une valeur d'extrémité que la différence de vitesse de rotation à surmonter pour l'adaptation de la vitesse de rotation est grande.

**17.** Procédé selon l'une quelconque des revendications 1 à 16, **caractérisé en ce qu'**un changement de rapport est effectué de manière prédictive dans la branche de la transmission à double embrayage (DKG1, DKG2) actuellement non utilisée, si l'embrayage conduisant la charge (K1, K2) reste inchangé par la commutation suivante attendue.

**18.** Procédé selon l'une quelconque des revendications 1 à 17, **caractérisé en ce que** la commande du double embrayage (DK) s'effectue en tant que frein de transmission et/ou en tant que frein moteur lorsqu'une vitesse de rotation cible de l'adaptation de la vitesse de rotation est supérieure ou égale à une vitesse de rotation en marche à vide du moteur d'entraînement.

**19.** Procédé selon l'une quelconque des revendications 1 à 18, **caractérisé en ce que** la commande du double embrayage (DK) s'effectue également en tant que frein de transmission et/ou en tant que frein moteur lorsque, en dessous d'une vitesse de rotation en marche à vide, une régulation de la marche à vide est temporairement supprimée par intervention dans une commande du moteur.

**20.** Procédé selon l'une quelconque des revendications 1 à 19, **caractérisé en ce que** la commande du double embrayage (DK) s'effectue également en tant que frein de transmission et/ou en tant que frein moteur lorsque la commande active de freinage du double embrayage est terminée à l'obtention ou tout au plus pour un léger dépassement par le bas de la vitesse de rotation en marche à vide.

DKG

DKG1  DKG2        HG

i_1 i_2    i_HG1  i_HG2

AW GE1 GE2 z11 z21    z31    z41 VW1

tq_vw1

n_vw1

tq_ab_HG

n_ab_HG

M  DK K1 K2 z12 z22    z32 S1 z42 AB
   K2 K1

Fig.1

EP 2 619 482 B1

DKG2

AW   DKG   K1 GE1 i_2     VW1     HG        AB

n_K1

tq_K1

n_M                              n_ab

tq_M                             tq_ab

tq_K2

M          K2 GE2 i_1                        n_K2

DKG1

Fig.2

Start — F1

Für alle Kupplungen — F2

effektives Kupplungsmoment der schlupfenden Kupplung für Bremsvorgang bestimmen — F3

Für alle möglichen Gänge im freien Doppelkupplungsgetriebezweig — F4

schneller/langsamer laufende Kupplung bestimmen — F5

aktuelle Massenträgheitsmomente bestimmen — F6

Schaltung im Doppelkupplungsgetriebezweig notwendig und nicht prädiktiv durchführbar und nicht fertig bis zum Gangausschalten im Hauptgetriebe — F7

Ja

Wartezeit und damit Verlängerung für Drehzahlanpassung bestimmen sowie Änderung der Motordrehzahldifferenz während der Wartezeit berücksichtigen — F8

Nein

Abschätzung Dauer für Drehzahlanpassung bis zum Gangeinschalten — F9

Zusatzbelastung der schlupfenden Kupplung abschätzen und zu bestehender Belastung addieren — F10

Belastung zu hoch — F11

Ja

Nein

Dauer geringer als bisheriges Minimum oder erste nutzbare Kombination — F12

Ja

Kombination aus Kupplung und Gang als Minimum speichern — F13

Nein

noch Gänge zu prüfen — F14

Ja

Nein

weitere Kupplungen — F15

Ja

Nein

Kombination gefunden — F16

Nein

ENDE: keine Kombination aus Kupplung und Gang mit minimaler Zeitdauer für Drehzahlanpassung verfügbar — F18

Ja

ENDE: Kombination aus Kupplung und Gang mit minimaler Zeitdauer für Drehzahlanpassung — F17

Fig. 3

F1

Start

F2 — Festlegung schlupfende/haftende Kupplung gemäß Zielkriterium Komfort

F17 — Tausch schlupfende/haftende Kupplung

F3 — effektives Kupplungsmoment der schlupfenden Kupplung für Bremsvorgang bestimmen

F4 — Für alle möglichen Gänge im freien Doppelkupplungsgetriebezweig

F5 — schneller/langsamer laufende Kupplung bestimmen

F6 — aktuelle Massenträgheitsmomente bestimmen

F7 — Schaltung im Doppelkupplungsgetriebezweig notwendig und nicht prädiktiv durchführbar und nicht fertig bis zum Gangausschalten im Hauptgetriebe

Ja

F8 — Wartezeit und damit Verlängerung für Drehzahlanpassung bestimmen sowie Änderung der Motordrehzahldifferenz während der Wartezeit berücksichtigen

Nein

F9 — Abschätzung Dauer für Drehzahlanpassung bis zum Gangeinschalten

F10 — Zusatzbelastung der schlupfenden Kupplung abschätzen und zu bestehender Belastung addieren

F11 — Belastung zu hoch

Ja

Nein

F12 — Dauer geringer als bisheriges Minimum oder erste nutzbare Kombination

Ja

F13 — Kombination aus Kupplung und Gang als Minimum speichern

Nein

F14 — noch Gänge zu prüfen

Ja

Nein

F15 — Kombination gefunden

Nein

Ja

F16 — Kupplungen tauschbar

Ja

Nein

F19 — ENDE: keine Kupplung/Gang – Kombination verfügbar

F18 — ENDE: Kombination aus Kupplung und Gang mit minimaler Zeitdauer für Drehzahlanpassung

Fig. 4

Fig.5

Fig.6

Fig.7

| Schaltung | lastführende Kupplung vor der Schaltung | lastführende Kupplung nach der Schaltung | haftende Kupplung während der Drehzahlanpassung | Wechselzeitpunkt der lastführenden Kupplung |
|---|---|---|---|---|
| normal (beide Kupplungen zu Beginn der Drehzahlanpassung momentfrei) | K1 | K2 | K1 | vor/mit Beginn des Lastaufbaus |
| normal | K1 | K2 | K2 | während Drehzahlanpassung |
| geschlossen (eine Kupplung zu Beginn der Drehzahlanpassung geschlossener/teilgeschlossen) | K1 | K2 | K1 | vor/mit Beginn des Lastaufbaus |
| geschlossen | K1 | K2 | K2 | während Drehzahlanpassung |
| normal | K1 | K1 | K1 | - |
| normal | K1 | K1 | K2 | temporär während Drehzahlanpassung |
| geschlossen | K1 | K1 | K1 | - |
| normal | K2 | K1 | K2 | vor/mit Beginn des Lastaufbaus |
| normal | K2 | K1 | K1 | während Drehzahlanpassung |
| geschlossen | K2 | K1 | K1 | während Drehzahlanpassung |
| normal | K2 | K2 | K2 | - |
| normal | K2 | K2 | K1 | temporär während Drehzahlanpassung |
| geschlossen | K2 | K2 | K2 | - |
| geschlossen | K2 | K2 | K1 | temporär während Drehzahlanpassung |

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1624232 A1
- DE 102005033027 A1
- DE 102006054281 A1
- DE 102004039273 A1